# EUROPEAN PATENT APPLICATION

(11) **EP 3 358 510 A1**
(43) Date of publication of application: **08.08.2018**
(21) Application number: 17154224.4
(22) Date of filing: 01.02.2017
(51) Int. Cl.: G06Q 10/06, G06Q 30/08, H04W 72/10

(54) **NETWORK RESOURCES BROKERING SYSTEM AND BROKERING ENTITY FOR ACCESSING A NETWORK RESOURCE WITH PREFERENTIAL TREATMENT**

(71) Applicant: Deutsche Telekom AG, 53113 Bonn (DE)
(72) Inventor: REITH, Lothar, 60596 Frankfurt am Main (DE)
(74) Representative: Patentship Patentanwaltsgesellschaft mbH

(57) **Abstract**

The disclosure relates to a network resources brokering system (100), comprising: a communication network (110) with at least one enforcement function for preferential treatment and charging; and a brokering entity (120), configured to receive requests (131, 132, 133) from a plurality of network entities (121, 122, 123) for providing preferential treatment (124) during usage of chargeable resources (111, 112, 113) within a predefined charging period (125), each request comprising an electronic bid value (141, 142, 143) competing with other network entities (121, 122, 123) for preferential treatment during the usage of chargeable resources in the charging period (125), wherein the brokering entity (120) is configured to rank each network entity (121) from the plurality of network entities (121, 122, 123) into one of a multiplicity of success classes based upon their electronic bid values offered and to interwork with the at least one enforcement function for preferential treatment and charging.

## Description

### TECHNICAL FIELD

The present disclosure relates to a network resources brokering system and a brokering entity for providing access to at least one network resource of a communication network within a charging period, which interworks with a minimum of one enforcement function for preferential treatment and charging. In particular, the disclosure relates to a system and method for granting preferential treatment during a charging period to a successful bidder of a bidding process and for enforcing said preferential treatment during network usage and for charging the amount bid for each chargeable consumption unit consumed during a charging period

### BACKGROUND

Charging, accounting and billing are crucial features of communication systems and services. It has to be differentiated between retail charging of subscribers and wholesale-charging of wholesale customers such as resellers, wholesale partners, MVNOs and 5G slice owners. The invention is primarily useful for wholesale charging, but may also be applicable to retail charging e.g. if a 5G slice instance is dedicated to a large customer from the automotive industry. Network providers must design tariffs for the whole range of services offered, retail and wholesale. This is partly a marketing decision, tariffs should be attractive to customers, but network providers are also concerned with technical efficiency,cost-recovery and optimized monetization of value. Charging schemes should encourage the customers and wholesale partners for efficient use of the network resources and should generate revenue in a fair way according to the relative usage by the customers. The development of multiservice and multilayer next generation mobile networks (NGMN) poses new challenges to the design of charging schemes. In multiservice networks, tariffs can depend on a number of parameters which define the traffic and quality of service (QoS) characteristics of a usage. Charges should reflect network resource usage. The way a customer uses the network depends on the tariffs and how the customer values each type of connection. Charging periods have been used in the field of telecommunications networks to provide differentiated pricing per charging period, such as so called time of day accounting. With the advent of next generation networks such as 5G, new network functions, layers, infrastructures and services can be realized, including the hosting of customer applications inside the network infrastructure, such as defined by ETSI MEC. The value of hosting customer applications close to the user for low latency access or for allowing the offloading of compute intensive operations to the cloud should be monetizableThe current charging schemes are no longer suitable to guarantee a fair charging of used network resources and to avoid inefficient usage of network resources.

### SUMMARY

It is the object of the invention to provide an intelligent charging concept in order to achieve efficient utilization of network resources, in particular in a next generation mobile and fixed networks where network resources are dynamically provided.

This object is achieved by the features of the independent claims. Further implementation forms are apparent from the dependent claims, the description and the figures.

A basic idea of the invention is to apply a capacity brokering archichtecture, where network resources are provided dynamically depending upon bids offered. The price for the consumption of chargeable consumption units consumed during a charging period can be determined in a bidding process. This new charging concept provides efficient utilization of network resources, in particular in 5G mobile networks.
The invention provides a system, a method as well as a business model. The invention is based on the idea to introduce dynamic pricing to the process of price definition for chargeable consumption units that get consumed during a charging period. It allows determining the price of a chargeable consumption unit consumed during a charging period in a bidding process that occurs prior to the start of the charging period. In a preferred embodiment the length of a charging period shall be aligned with the length of the aggregation period for operational statistics as defined in IETF RFC 1857. In many telecommunications networks today, an aggregation period of 15 minutes is used - therefore a preferred embodiment assumes a uniform charging period length of 15 minutes which is synchronized to start and stop at the same time as the aggregation period for operational statistics. This synchronization allows creating a feedback loop which utilizes the operational statistics and other statistics gathered also in 15 minute intervals, such as user experience statistics, drive tests in mobile networks doing automatic test calls and measuring the call quality, applications in mobile handsets doing regular ping tests to measure the availability of low latency access etc. Of course other charging period durations such as 5 minute intervals or even shorter are possible..

The concept of the invention is to introduce a bidding process where a multiplicity of bidders with a minimum of one bidder place bids for a set of charging periods, for example in one bidding event they may place 96 bids for the 96 charging periods of one day (for example for the next day or for the day after the next day). In another preferred embodiment, they place in one bidding event 672 bids (7 for charging period of each day of the coming week). The amount of bids may be multiplied if the bidding occurs separately for each class of chargeable consumption units. For example, the chargeable consumption unit may be one bit (or one byte) contained in a data packet of 8 differentiated priority classes, than 5376 bids have to be considered per week and per bidder being the charged party. It is therefore essential, that the bidding process is performed in an automated way where a bidding engine of the charging party keeps track of all bids and of the resulting association of bidders to success-classes for each charging period and chargeable consumption demand unit class. In addition, it is assumed that the bidding engine interfaces automatically to the resource scheduler of respective resources in a direct or indirect way. Bidding will be done in an automated way based on policies set by the charged party which benefits from being elected as successful bidder in a success class. The business model is based on the business agreement between the charged party as bidder and the charging party as network resource owner or agent of the network resource owner that the charged party will be obliged to pay the amount it has bid for each chargeable resource unit that the charged party's users consume during said charging period where it is elected as successful bidder in a success class.

The lowest success class may be referred to as success-class 0. The bidders having offered the lowest price per chargeable consumption unit during in a charging period will be assigned to the lowest success class. The charging party may demand a minimum price per chargeable consumption unit, and all bidding parties which do not provide a bid or only offer only the minimum price in their bid will be placed in the lowest success-class. All bidders having offered the same price will be placed in the same success-class. When a first bidder offers a higher price per chargeable consumption unit than a second bidder, then the first bidder will be placed in a higher success-class then the second bidder. The success-class of a bidder during a charging period determines or at least influences the scheduling rank that the scheduler uses during that charging period.

In case that the scheduler is scheduling the forwarding of data packets in a telecommunications network and in case that a priority queue is normally used for that purpose, then the invention introduces a hierarchically structured recursive priority queue, where the scheduler inspects first the higher order priority queue in which demands for resource consumption unit consumption are ordered according to the success-class of the bidder associated with said demand for resource consumption unit consumption. The result of the dequeue operation is the lower order priority queue as it is used today in state of the art scheduling in packet switched telecommunications networks, such as in routers and switches.

In case that the scheduler is scheduling the assignment of resource blocks in a radio access network and in case that a priority queue is normally used for that purpose, then the invention introduces a hierarchically structured recursive priority queue, where the scheduler dequeues first the higher order priority queue in which demands for resource consumption unit consumption are ordered according to the success-class of the bidder associated with said demand for resource consumption unit consumption. The result of the dequeue operation is the lower order priority queue as it is used today in state of the art scheduling of radio access network resources.

In case that the scheduler is scheduling the assignment of connected virtual compute resources and of connected virtual storage resources in such a way that preferential treatment means that a demand associated with a bidder associated with a higher success-class will received preferential treatment over a demand associated with a bidder that is associated with a lower success-class during the current charging period. Preferential treatment may include preferential placement of an application on a physical host that located closer to the user and therefore is able to provide better user experience based on meeting a requirement of the application demanding low latency access of a certain low latency class such as maximum 25 milliseconds or even meeting a requirement for maximum 5 millisecond access which may be referred to as ultra low latency, applicable to both mobile and fixed networks access in telecommunications networks. If the scheduler for said application placement uses a normal queue or a priority queue, then the invention introduces a hierarchically structured recursive priority queue, where the scheduler dequeues first the higher order priority queue in which demands for resource consumption unit consumption are ordered according to the success-class of the bidder associated with said demand for resource unit consumption. The result of the dequeue operation is the lower order priority queue as it is used today in state of the art scheduling of radio access network resources.

The enforcement of the preferential treatment of a resource consumption demand associated with a bidder according to the success-class in a particular charging period for a particular resource consumption class is based on introducing a priority queue containing as elements the instances of normal queues (which may itself be a priority queue or a normal queue). The concepts of queue and priority queue are well known concepts in scheduling. When a scheduler assigns resources to a particular first resource consumption demand, it identifies this first resource consumption demand by executing a dequeue operation on a queue, which may be a normal queue (first in first out) or a priority queue, where the insertion of an element into the queue requires sorting the element according to some priority.

In a preferred embodiment, the charged party is a 5G network slice instance owner, and the charged party's users are mobile subscribers that are permanently assigned to said 5G network slice instance, or alternatively mobile subscribers that get assigned to said 5G network slice based upon signaling an APN, or in another preferred embodiment based upon an application layer event that occurs during an access session (PDP context) that leads to certain IP flows getting offloaded to a 5G slice instance via traffic offload function as defined ETSI MEC" for example to satisfy ultra low latency requirements.

In order to describe the invention in detail, the following terms, abbreviations and notations will be used:
- 5G:: fifth generation mobile network
- LTE: Long Term Evolution
- PDP: Packet Data Protocol
- APN: Access Point Name
- QoS: Quality of Service
- MEC: Mobile Edge Computing

Systems, devices and methods according to the disclosure describe new charging concepts for communication networks, in particular multiservice and multilayer communication networks such as 5G mobile networks. Multiservice communication networks include facilities for charging, accounting and billing. In this context, charging designates the calculation of a charge for a usage, e.g. during a charging period.

According to a first aspect, the invention relates to a network resources brokering system, comprising: a communication network with at least one enforcement function for preferential treatment and charging ; and a brokering entity, configured to receive requests from a plurality of network entities for providing preferential treatment during usage of chargeable resources within a charging period, each request comprising an electronic bid value competing with other network entities for preferential treatment during the usage of chargeable resources in a predefined charging period, wherein the brokering entity is configured to rank eachnetwork entity from the plurality of network entities into one of a multiplicity of success classes based upon bids offered and to interwork with the enforcement function for preferential treatment and charging, which not only enforces the preferential treatment of higher ranked network entities over lower ranked network entities but also enforces the charging of the amount bid for each chargeable consumption unit consumed during the charging period to an account associated with the bidder, i.e. the network entity to which the preferentially treated usage associated with, where usage is defined as the demand satisfaction of a chargeable resource consumption demand..

Such a network resources brokering system with enforcement function provides an intelligent charging which achieves efficient utilization of network resources, allows better monetization of network value and results in efficient use of network resources, even if no bid has been entered because a differentiated minimum price per charging period has the same effect as differentiated time of day accounting.

In an implementation form of the network resources brokering system, the brokering entity is configured to rank the network entities according their success class prior to the start of the charging period.

In an implementation form of the network resources brokering system, the at least one chargeable resource unit is a wireless resource block, which constitutes a radio access network (RAN) resource and the brokering entity is configured to grant preferenential treatment regarding the consumption of wireless resource blocks, which are known from 4G and are expected to be part of 5G in a similar way as well.

This provides the advantage that RAN resources can be better monetized by operators, and can be more efficiently used as some usages may be moved to other times of the day or of the week when demand for RAN resources is lower

In an implementation form of the network resources brokering system, the brokering entity is configured to rank the plurality of network entities according to their electronic bid values and to enforce the preferential treatment of any higher ranked network entity over any lower ranked network entity.

In an implementation form of the network resources brokering system, the brokering entity is configured to assign a maximum of one network entity to a success class, allowing a clear ranking of network entities. In case network entities provided the same electronic bid value, the network entity gets ranked higher where the bid has been received earlier, or a fair arbitration across the multiplicity of bids in one bid or even across multiple subsequent bidding events, such as assigning a preference joker round robin among the network entities.

In an implementation form of the network resources brokering system, the brokering entity is configured to assign multiple network entities to the same success class and to apply fair arbitration schemes such as a round robin distribution among the priority queues of equally ranked bidders.

In an implementation form of the network resources brokering system, the chargeable resource is a QoS differentiated compute unit provided by a virtual machine or by a container where the QoS differentiation is differentiated by a low latency class.
This provides the advantage that by using a high electronic bid value for such a chargeable resource, a user associated with the network entity can connect to a network resource within a close geographical distance.

In an implementation form of the network resources brokering system, the charging period is predetermined having a predetermined start time and a predetermined duration.

This provides the advantage that the network entities know at what time and how long they can benefit from preferential treatment.
In an implementation form of the network resources brokering system, the communication network is a network according to a 3GPP defined fifth generation (5G), and wherein the 5G slice instance owner benefits from the preferential treatment..

In an implementation form of the network resources brokering system, the brokering entity is configured to interwork directly or indirectly via a enforcement function management system with at least one enforcement function for preferential treatment and charging in order to provide preferential treatment to demands associated with the selected network entity during a charging period.

In an implementation form of the network resources brokering system, the brokering entity is configured to instruct a minimum of one online charging function to charge the amount bid for the consumption of each chargeable consumption unit consumed during a charging period.

In an implementation form of the network resources brokering system, the brokering entity is configured to instruct a minimum of one online charging function as defined by 3GPP to charge the amount bid for the consumption of each chargeable consumption unit consumed during a charging period.

In an implementation form of the network resources brokering system, the brokering entity is configured to instruct a minimum of one offline charging function as defined by 3GPP to charge the amount bid for the consumption of each chargeable consumption unit consumed during a charging period.

In an implementation form of the network resources brokering system, the brokering entity is configured to instruct a 3GPP defined PCRF to create a policy and charging rule set which automatically and simultaneously changes the charging rules and the policy at charging period change events whereby simultaneously enforcing the change of preferential treatment policies and the change of charging policies to reflect the bids offered for the charging periods prior to and after the charging period change.

In an implementation form of the network resources brokering system, the brokering entity is configured to instruct a wholesale PCRF to create a policy and charging rule set which automatically and simultaneously changes the changes the charging rules and the policy at charging period change events whereby simultaneously enforcing the change of preferential treatment policies and the change of charging policies to reflect the bids offered for the charging periods prior to and after the charging period change.

In an implementation form of the network resources brokering system, the brokering entity is configured to instruct a network function responsible for the management of the enforcement of the preferential treatment & charging to interface with network elements implementing an enforcement function for preferential treatment & charging.

In an implementation form of the network resources brokering system, the brokering entity is configured to instruct a network function responsible for the management of the preferential treatment & charging, which in turn interfaces with enforcement functions for preferential treatment & charging implemented on network elements.

This provides the advantage that the network resources are chargeable which means that they may be partitioned into small chargeable resource consumption units, e.g. by a time-multiplex, frequency-multiplex or space-multiplex such as timeslots on a network link using time division multiplex, codes in a radio link based on CDMA, wireless resource blocks in a 4G LTE or 5G network, or electrical power units such as energy used for used for radio transmission, with energy units measured in milliwatt or microwatt or nanowatt.

In an implementation form of the network resources brokering system, the brokering entity is configured to grant the selected network entity preferential scheduling for accessing the at least one network resource.

This provides the advantage that the selected network entity can be preferred when accessing the network resources, e.g. by being the first on a list or by having the highest priority or other strategies.

In an implementation form of the network resources brokering system, the preferential scheduling is a preferential scheduling with respect to time and/or space.

This provides the advantage that the selected network entity is first served when there is available capacity on the network resource or that the selected network entity gets access to a network resource in close proximity to the user associated with the network entity in order to save power and reduce latency for connecting to the network resource.

In an implementation form of the network resources brokering system, a length of the charging period is aligned with a length of an aggregation period for providing operational statistics of the communication network.

This provides the advantage that statistics of the communication network, e.g. key performance indicators or a quality measure can be exploited to create a feedback loop which can be used for mashine learning and artificial intelligence in support of the charging party and the charged parties.

According to a second aspect, the invention relates to a brokering entity for providing access to at least one network resource of a communication network, the brokering entity comprising: a receiver, configured to receive requests from a plurality of network entities for accessing the at least one network resource within a charging period, each request comprising an electronic bid value competing with other network entities for accessing the at least one network resource with preferential treatment; and a controller, configured to determine for each charging period a bid ranking according to the bids offered by assigning the bids to a success class, where the success classes are ranked according to the amount of the electronic bid value in such a way, that a bidder providing a higher bid gets ranked higher and gets preferential treatment over a bidder that has provided a lower bid value.

Such a brokering entity interworking with the enforcement function for preferential treatment and charging provides an intelligent charging mechanism which achieves efficient utilization of network resources, in particular in a next generation mobile network where network resources are dynamically provided. Due to the ranking rules , competition of network entities for network resources can be introduced, resulting in an efficient use of the network resources, thereby optimizing data throughput as well as processor and memory utilization.

In an implementation form of the brokering entity, the communication network is a network according to a fifth generation (5G) or according to a further generation, and wherein the controller is configured to grant the selected network entity access with preferential treatment to at least one network resource of a network slice of the communication network.

According to a third aspect, the invention relates to a system for resource consumption scheduling in a telecommunications network based on bids offered, characterized by said resource consumption scheduling system being operated by a charging party granting preferential treatment during a charging period to a charged party that has been determined as successful bidder in a bidding process that occured prior to the start of said charging period.

In an implementation form of the system, said resource consumption scheduling is the scheduling of the consumption of chargeable resource consumption units.
In an implementation of the system, said usage is a chargeable resource consumption demand.(Das ist eine wichtige Definition zusammen mit der nachfolgenden, ggf weiter nach oben)

In an implementation of the system, said chargeable resource consumption demand satisfaction is the consumption of one chargeable resource unit for each chargeable resource consumption demand unit contained in the chargeable resource consumption demand.

In an implementation form of the system, said preferential treatment is the preferential scheduling of said consumption of said chargeable resource consumption units.

In an implementation form of the system, said preferential scheduling of said consumption of said chargeable resource consumption demand units is the preferential scheduling in the time dimension, characterized by said demand of said successful bidder getting satisfied prior to a lower ranked bidder in case both demand side parties compete for access to a chargeable consumption unit.

In an implementation form of the system, said preferential scheduling of said consumption of said chargeable resource consumption demand units is the preferential scheduling in the space dimension, and said successful bidder is serviced by a preferential placement of a network service function.

In an implementation form of the system, preferential placement of a network service function is the placement of a network service function in a cloudlet infrastructure that is located close to the user in order to minimize access latency.
In an implementation form of the system, said preferential scheduling of said consumption of said chargeable resource consumption units is the preferential scheduling in the space and time dimensions, and said successful bidder is serviced by preferential access to radio resources.

In an implementation form of the system, said preferential access to radio resources is achieved by assigning better QCI values during the charging period.

In an implementation form of the system, said telecommunications network is a public land mobile network.

In an implementation form of the system, said telecommunications network is a public land fixed network.

In an implementation form of the system, said telecommunications network is a 5G mobile network.

In an implementation form of the system, said charging party is the supply side party in said bidding process.

In an implementation form of the system, said charged party is a minimum of one demand side party that is part of a set of demand side parties that belong to a multiplicity with a minimum of one demand side parties which participate in said bidding process.

In an implementation form of the system, said charging period is the time between two charging period change events.

In an implementation form of the system, the first one of said charging period change events is the start of the first charging period.

In an implementation form of the system, each said charging period change event except said first one is marking the end of a charging period and the start of the next charging period.

In an implementation form of the system, said charging period is a predetermined charging period with a predetermined charging period start time and a predetermined charging period duration.

In an implementation form of the system, said predetermined charging period duration is 15 minutes.

In an implementation form of the system, said predetermined charging period duration is 10 minutes.

In an implementation form of the system, said predetermined charging period duration is 5 minutes.

In an implementation form of the system, said predetermined charging period duration is 1 minute.

In an implementation form of the system, said predetermined charging period duration is 1 second.

In an implementation form of the system, said successful bidder is determined in a bidding process that involves said charging party offering a multiplicity with a minimum of one charging periods with preferential treatment for the successful bidder.

In an implementation form of the system, said successful bidder is determined in said bidding process and said bidding process comprises a multiplicity of bidding rounds with a minimum of one bidding round.

In an implementation form of the system, the bidding process determines a single successful bidder.

In an implementation form of the system, the bidding process determines a multiplicity of successful bidders that are ranked according to their offered bids, where only the bidders with the lowest bid do not get a preferential treatment, and where all bidders that have offered the same bid for a charging period get treated equally according to a fair arbitration method, and where higher ranked successful bidders get preferential treatment over lower ranked successful bidders and over unsuccessful bidders who offered the lowest bid.

In an implementation form of the system, said fair arbitration method is round robin scheduling starting with a random successful bidder from the set of successful bidders having offered the same bid.

In an implementation form of the system, said fair arbitration method is round robin scheduling starting with the bidder who provided the first of the successful bids (time of bidding).

In an implementation form of the system, said fair arbitration method is a scheduling method that is based on selecting a random successful bidder from the set of successful bidders having offered the same bid.

In an implementation form of the system, each demand side party belonging to a multiplicity of demand side parties is determined as successful bidders for a resource consumption unit during a charging period based on the fact that each of said demand side party belonging to a multiplicity of demand side parties is determined as successful bidders having offered the same bid price in the final round of said bidding process for each said resource consumption unit consumed during said charging period.

In an implementation form of the system, a single demand side party is determined as successful bidder for a charging period based on the fact that said single demand side party has offered the highest bid for said resource consumption unit during said charging period.

The system according to the third aspect can also be implemented as a method or as a business model.

### BRIEF DESCRIPTION OF THE DRAWINGS

Further embodiments of the invention will be described with respect to the following figures, in which:
Fig. 1 shows a schematic diagram illustrating a network resources brokering system 100 according to the disclosure.
Fig. 2 shows a block diagram of a brokering entity 200 according to the disclosure.
Fig. 3 shows a schematic diagram illustrating a brokering method 300 according to the disclosure.
Fig. 4a) shows a schematic diagram illustrating a chargeable resource 610 according to a first implementation.
Fig. 4b) shows a schematic diagram illustrating a chargeable resource 620 according to a second implementation.
Fig. 5a) shows a schematic diagram illustrating a chargeable resource consumption demand unit 710 according to an embodiment.
Fig. 5b) shows a schematic diagram illustrating a demand 720 according to an embodiment.
Fig. 5c) shows a schematic diagram illustrating a demand satisfaction 730 according to an embodiment.
Fig. 6a) shows a schematic diagram illustrating a charging event, account and token 810 according to an embodiment.
Fig. 6b) shows a schematic diagram illustrating demand instances 721, 722, 723, 724, 725, 726 according to an embodiment.
Fig. 7a) shows a schematic diagram illustrating an exemplary time sequence of a demand according to an embodiment.
Fig. 7b) shows a schematic diagram illustrating an exemplary priority queue 930 according to an embodiment.
Fig. 8 shows a schematic diagram illustrating an exemplary priority queue with pointers to demand instances sorted by demand arrival start time according to a second implementation.
Fig. 9 shows a schematic diagram illustrating an exemplary priority queue with pointers to demand instances sorted by demand arrival completion time according to an embodiment.
Fig. 10a shows a schematic diagram illustrating a demand context according to an embodiment.
Fig. 10b shows a schematic diagram illustrating an exemplary demand context instance according to an embodiment.
Fig. 11 shows a schematic diagram illustrating a priority queue sorted first by priority contained in context, and second by demand arrival start time according to an embodiment.
Fig. 12 shows a schematic diagram illustrating an exemplary multi-dimensional priority queue according to an embodiment.
Fig. 13 shows a schematic diagram illustrating an exemplary multi-dimensional priority scheduling queue according to an embodiment.
Fig. 14 shows a schematic diagram illustrating a multi-dimensional scheduling priority queue according to an embodiment.
Fig. 15 shows a schematic diagram illustrating a charging period change event according to an embodiment.
Fig. 16 shows a schematic diagram illustrating a charging period change event mechanism related to the enforcement of preferential treatment according to the success classes of the bidder during the curring tan next charging periods according to an embodiment.
Fig. 17 shows a schematic diagram illustrating a multidimensional priority queue of 2 dimensions according to an embodiment.
Fig. 18 shows a schematic diagram illustrating a multidimensional priority queue of 2 dimensions according to a further embodiment.
Fig. 19 shows a schematic diagram illustrating a token bucket according to an embodiment.
Fig. 20 shows a schematic diagram illustrating a token bucket operation according to an embodiment.
Fig. 21 shows a schematic diagram illustrating a token bucket operation using a modified compliance check according to an embodiment.
Fig. 22 shows a schematic diagram illustrating a charging period change event mechanism according to an embodiment.
Fig. 23 shows a schematic diagram illustrating a charging period change event mechanism according to an embodiment.
Fig. 24 shows a schematic diagram illustrating a bidding process with preparation steps by charing party according to an embodiment.
Fig. 25 shows a schematic diagram illustrating a bidding process with preparation steps by charing party network side according to an embodiment.
Fig. 26 shows a schematic diagram illustrating a bidding process with preparation steps by charing party network side according to an embodiment.
Fig. 27 shows a schematic diagram illustrating a bidding process with preparation steps by charing party network side according to an embodiment.
Fig. 28 shows a schematic diagram illustrating a bidding process with preparation steps by charing party network side according to an embodiment.

### DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

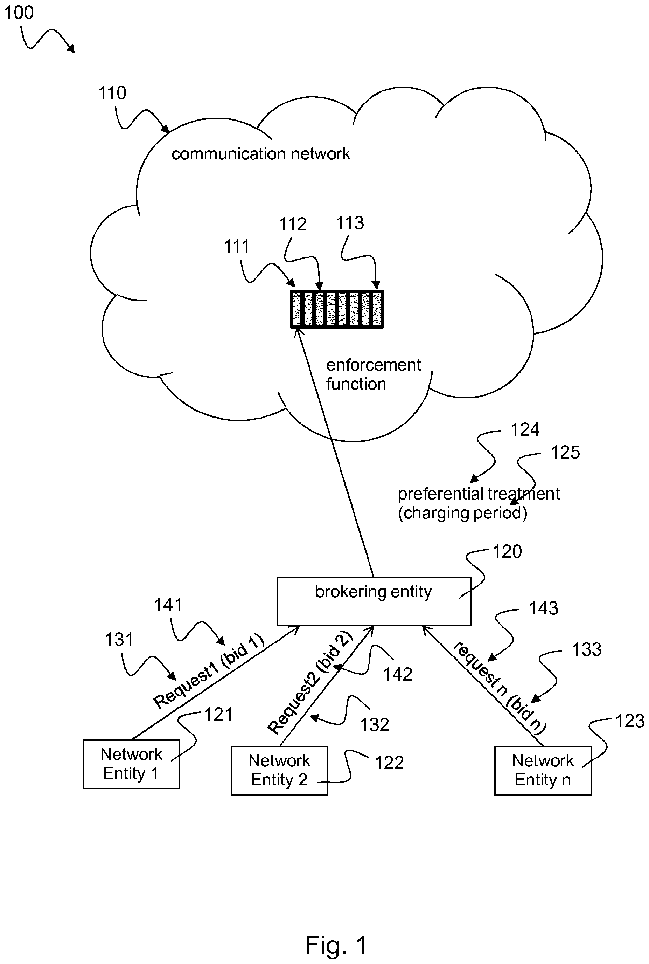

Fig. 1 shows a schematic diagram illustrating a network resources brokering system 100 according to the disclosure. The network resources brokering system 100 includes a communication network 110 with at least one enforcement function for preferential treatment and charging and a brokering entity 120.

The brokering entity 120 receives requests 131, 132, 133 from a plurality of network entities 121, 122, 123 for providing preferential treatment 124 during usage of chargeable resources 111, 112, 113 within a predefined charging period 125, each request comprising an electronic bid value 141, 142, 143 competing with other network entities 121, 122, 123 for preferential treatment during the usage of chargeable resources in the charging period 125. The brokering entity 120 ranks each network entity 121 from the plurality of network entities 121, 122, 123 into one of a multiplicity of success classes based upon their electronic bid values offered and to interwork with the at least one enforcement function for preferential treatment and charging.

The brokering entity 120 may rank the network entities 121 according to their success class prior to a start of the charging period 125.

The at least one chargeable resource 111, 112, 113 may be a wireless resource block, which constitutes a radio access network (RAN) resource and the brokering entity 120 may grant preferenential treatment regarding the consumption of wireless resource blocks. The brokering entity 120 may rank the plurality of network entities 121, 122, 123 according to their electronic bid values 141, 142, 143 and may enforce the preferential treatment of any higher ranked network entity over any lower ranked network entity.

The brokering entity 120 may assign a maximum of one network entity to a success class, allowing a clear ranking of network entities. The brokering entity may assign multiple network entities to the same success class and may apply fair arbitration schemes such as a round robin distribution among the priority queues of equally ranked bidders.

The chargeable resource may be a QoS differentiated compute unit provided by a virtual machine or by a container where the QoS differentiation is differentiated by a low latency class. The charging period 125 may be predetermined having a predetermined start time and a predetermined duration.

The communication network 110 may be a network according to a 3GPP defined fifth generation (5G), and wherein a 5G slice instance owner benefits from the preferential treatment.

The brokering entity 120 may interwork directly or indirectly via a enforcement function management system with at least one enforcement function for preferential treatment and charging in order to provide preferential treatment to demands associated with the selected network entity during a charging period.

The brokering entity 120 may instruct a minimum of one online charging function to charge the amount bid for the consumption of each chargeable consumption unit consumed during a charging period. The brokering entity may instruct a minimum of one online charging function as defined by 3GPP to charge the amount bid for the consumption of each chargeable consumption unit consumed during a charging period. The brokering entity may instruct a minimum of one offline charging function as defined by 3GPP to charge the amount bid for the consumption of each chargeable consumption unit consumed during a charging period.

The brokering entity may instruct a 3GPP defined PCRF to create a policy and charging rule set which automatically and simultaneously changes the charging rules and the policy at charging period change events whereby simultaneously enforcing the change of preferential treatment policies and the change of charging policies to reflect the bids offered for the charging periods prior to and after the charging period change.

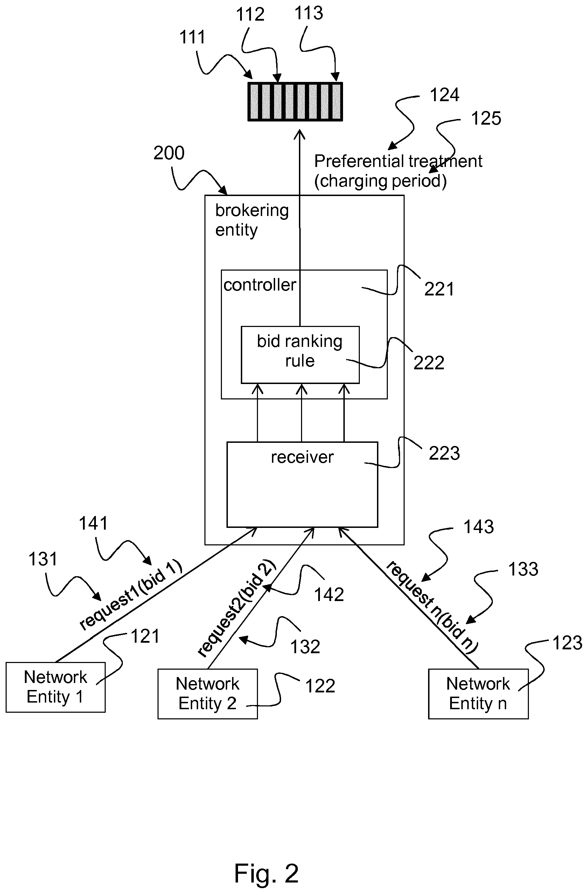

Fig. 2 shows a block diagram of a brokering entity 200. The brokering entity 200 includes a receiver 223 and a controller 221.

The receiver 223 receives requests 131, 132, 133 from a plurality of network entities 121, 122, 123 for accessing 124 at least one network resource 111, 112, 113 within a charging period 125. Each request 131, 132, 133 includes an electronic bid value 141, 142, 143 competing with other network entities 121, 122, 123 for accessing the at least one network resource 111, 112, 113 with preferential treatment.

The controller 221 determines for each charging period a bid ranking according to the electronic bid values offered by assigning the electronic bid values to a success class. The success classes are ranked according to the amount of the electronic bid value in such a way, that a bidder providing a higher bid gets ranked higher and gets preferential treatment over a bidder that has provided a lower bid value.

The communication network 110 may be a network according to a fifth generation (5G) according to a further generation. The controller 221 may grant the selected network entity 121 access 124 with preferential treatment to at least one network resource of a network slice of the communication network.

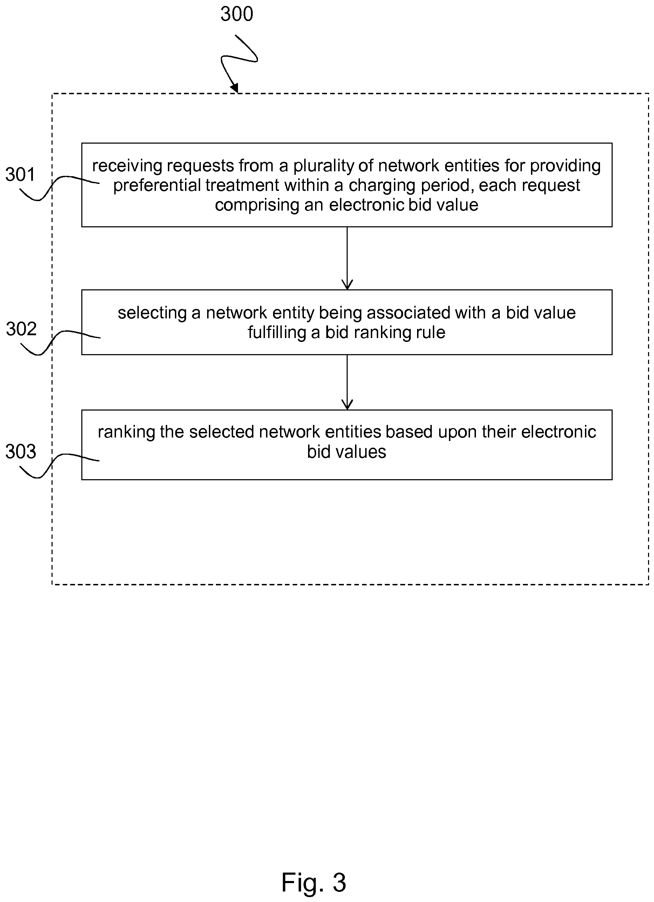

Fig. 3 shows a schematic diagram illustrating a method 300 for providing access to at least one network resource of a communication network according to the disclosure.

The method 300 includes receiving 301 requests from a plurality of network entities for providing preferential treatment within a charging period, each request comprising an electronic bid value, e.g. as described above with respect to Figs. 1 and 2. The method 300 further includes selecting 302 a network entity being associated with a bid value fulfilling a bid ranking rule, e.g. as described above with respect to Figs. 1 and 2. The method 300 further includes ranking 303 the network entities based upon their electronic bid values, e.g. as described above with respect to Figs. 1 and 2. The method 300 may be run on a brokering entity 120, 200 as described above with respect to Figures 1 and 2.

In a preferred embodiment, the network entity (i.e. the charged party) is a 5G network slice owner, and the charged party's users are mobile subscribers that are permanently assigned to said 5G network slice, or alternatively mobile subscribers that get assigned to said 5G network slice based upon signaling an APN (access point name, i.e. a gateway between a GSM, GPRS, 3G, 4G or 5G mobile network and another communication network, e.g. the Internet), or in another preferred embodiment based upon an application layer event that occurs during an access session (packet data protocol PDP context, i.e. a data structure present on both the serving support node and the gateway support node which contains the subscriber's session information when the subscriber has an active session) that leads to certain IP flows getting offloaded or redirected to another 5G slice, for example to satisfy ultra low latency requirements.

A preferred embodiment is based on 15 minute charging periods. A preferred embodiment is based on demand side parties using machine learning that builds a model based on a learning period with random bids or human expert provided bids, which evaluates the resulting user experience for an MVNO or 5G slice owner and applies the learned model for future automatic bidding once the model has learned enough in a initial training phase. Key for learning is the feedback loop enabled by operational measurement data or application ping data and other statistic data and network event data.

Another preferred embodiment is based on an innovative scheduling method which allows implementing the hierarchical preferential treatment of successful bidders using an innovative scheduling algorithm.

Another preferred embodiment is the enforcement of the preferential treatment according to the success-class determined in the bidding process.

Another preferred embodiment is describing the details of an innovative 5G New Radio Scheduler, how to implement the procedures occurring at a charging period change in realtime in an efficient and scalable way.

Another preferred embodiment is based on realtime charging based on European Patent EP 1371 220 B1.

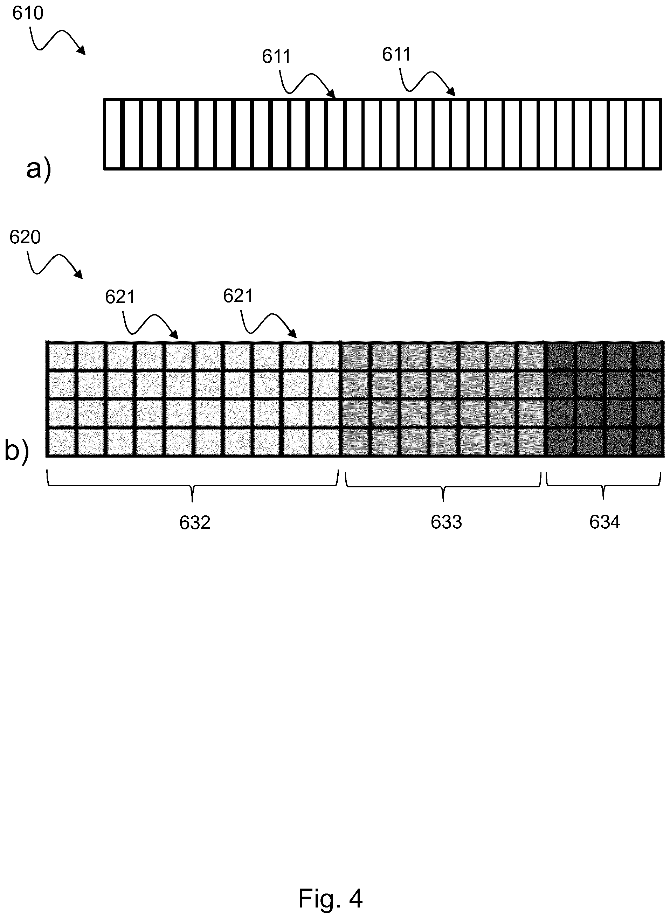

Fig. 4a) shows a schematic diagram illustrating a chargeable resource 610 according to a first implementation.

A chargeable resource is a resource owned by a resource owner who has decided to charge a minimum of one charged party for the consumption of the resource. An example of a chargeable resource 610 comprising multiple chargeable resource consumption units 611 is shown in Fig. 4a). An example of a chargeable resource is the resource required to consume one byte (comprising 8 bit) of data contained in an IP packet, where consume may mean store, or forward, or store and forward, or receive, or transmit.

Fig. 4b) shows a schematic diagram illustrating a chargeable resource 620 according to a second implementation.

Another example of a chargeable resource 620 is a wireless resource block in the radio network of a 4G (LTE) or 5G mobile network. The diagram shows the partitioning (slicing) of a field of wireless resource blocks 620 (comprising chargeable resource consumption units 621 (shown above are 80, each representing one chargeable resource) into 3 partitions 632, 633, 634 which may also be referred to as RAN slices. The diagram shows a static partitioning into 3 RAN slices for 3 slice owners. It is a goal of the invention to allow dynamic partitioning, and to allow dynamic pricing for such wireless resource blocks.

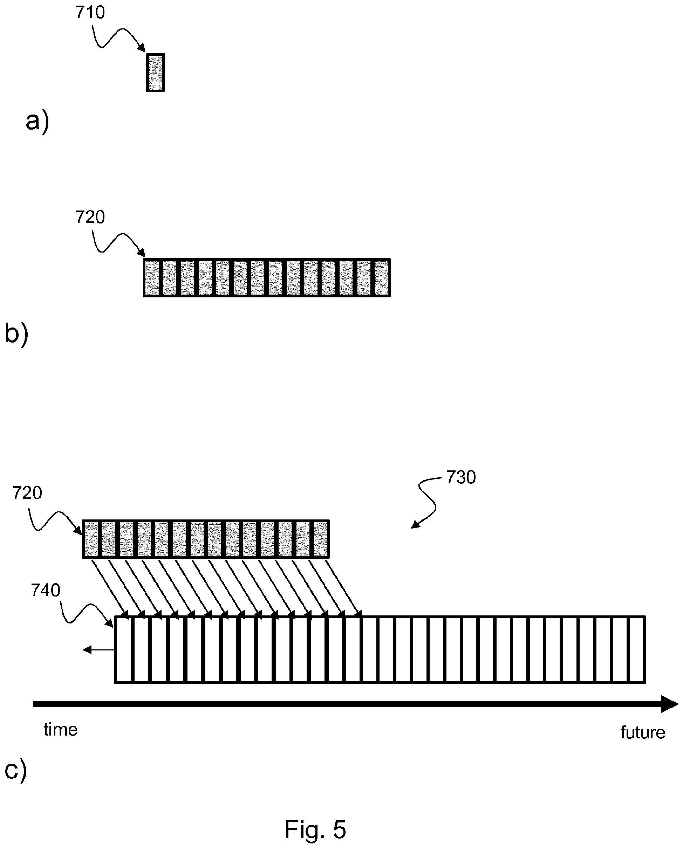

Fig. 5a) shows a schematic diagram illustrating a chargeable resource consumption demand unit 710 according to an embodiment.

A chargeable resource consumption demand unit 710 represents a unit of a demand for the consumption of one unit of a chargeable resource, for example a demand for the consumption of one byte of data or for the consumption of one wireless resource block. Fig. 5b) shows a schematic diagram illustrating a demand 720 according to an embodiment.

A demand 720 is an object that comprises multiple chargeable resource consumption demand units. An abstract demand has a yet undefined arrival start time and a yet undefined arrival completion time, and a yet undefined number of resource consumption demand units - the number of resource consumption demand units shown here is just for illustration. Examples of demands are packets arriving at the scheduler of a network switch, where each byte of the packet represents a chargeable resource consumption demand unit. Another example for a demand is a a byte arriving at a radio network controler, requiring a number of wireless resource blocks for transmission over a radio link, where said number of wireless resource blocks is equal to the number of resource consumption demand units contained in the demand.

Fig. 5c) shows a schematic diagram illustrating a demand satisfaction 730 according to an embodiment.

A demand satisfaction 730 is the mapping of a demand 720 to a sufficient number of unused resource consumption units 740 such that each resource consumption demand unit gets mapped to a free resource consumption unit which becomes available in time, and the usage of said mapped resource consumption units by that resource consumption demand units such that after the usage these resource consumption units are no longer unused. Fig. 5c) above shows the usage.

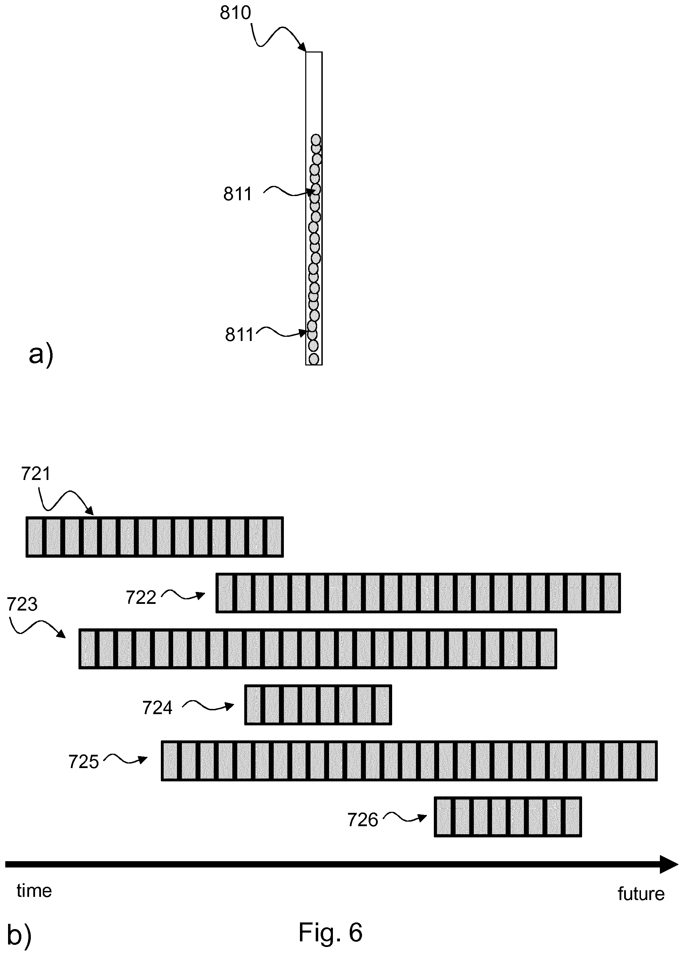

Fig. 6a) shows a schematic diagram illustrating a charging event, account and token 810 according to an embodiment.

The charging event is the moment when a legal obligation is created according to a contract, for example at a usage time. During the charging event, an account 810 gets incremented or decremented by a number of tokens for each chargeable consumption unit that gets consumed. Incrementing an accounting record (accounting account or postpaid account) by 8 can be interpreted as adding 8 tokens, decrementing a prepaid account (realtime charging account, online charging account, token bucket) by 5 can be interpreted as removing 5 tokens.

Fig. 6b) shows a schematic diagram illustrating demand instances 721, 722, 723, 724, 725, 726 according to an embodiment.

A demand instance is a demand with a defined arrival start time, a defined arrival stop time and a defined number of chargeable resource consumption demand units in a defined number of resource dimensions (e.g. resource dimension byte, or e.g. resource dimension wireless resource block, etc). A multidimensional demand contains resource consumption demand units of multiple dimensions.

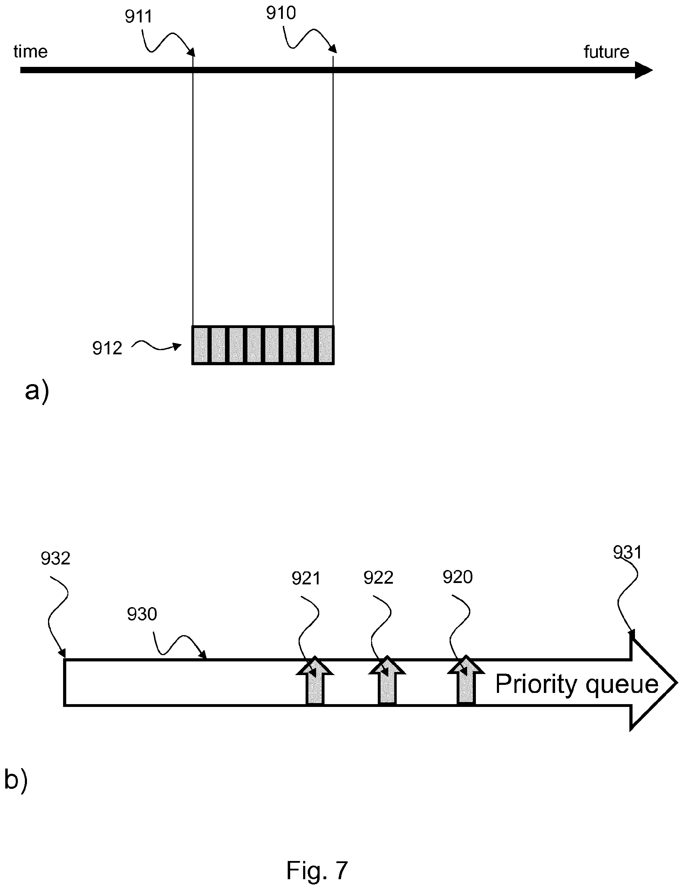

Fig. 7a) shows a schematic diagram illustrating an exemplary time sequence of a demand according to an embodiment. The time sequence includes the demand instance start time 910 and the demand instance arrival completion time 911.

Fig. 7b) shows a schematic diagram illustrating an exemplary priority queue 930 according to an embodiment.

This figure shows a priority queue 930 comprising a queue-head 931 and a queue-tail 932, said priority queue currently containing 3 elements 920, 921, and 922. The elements in this example are shown in the form of an arrow, to indicate that depending on implementation the elements may be pointers, such as pointers to demand instances. In case the elements are inserted into the queue strictly depending on arrival time (either start time or completion time), then the insertion may be achieved by a simple enqueue operation at the respective arrival time to the tail of the queue. In that case the priority queue is the speical case of a normal queue. In case that at arrival time the insertion requires sorting of the existing elements to find the right insertion position, the priority queue is truly a priority queue, because it supports insertion of a new element into any position according to the priority of element that gets inserted, and the priorities of the elements already in the queue.

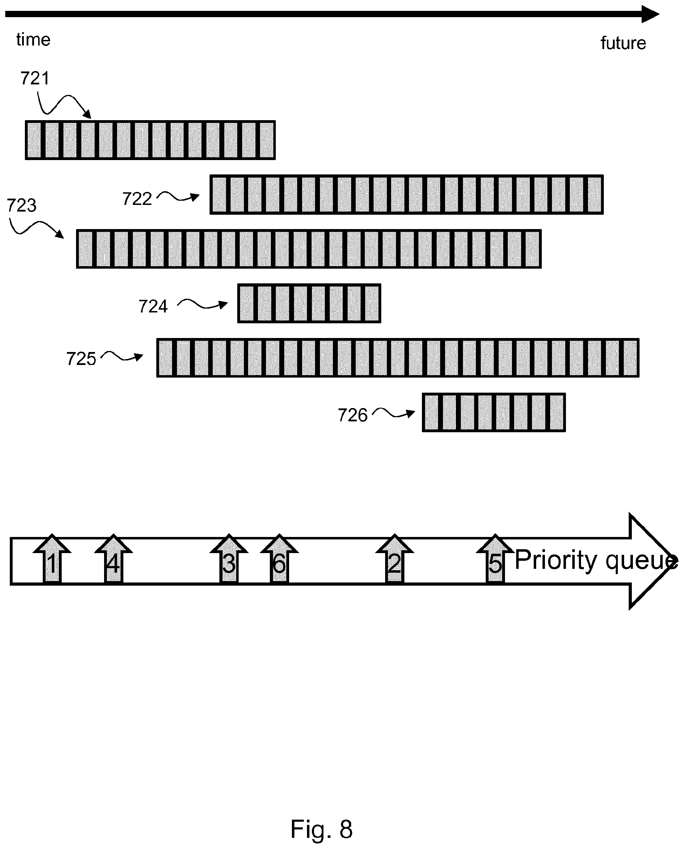

Fig. 8 shows a schematic diagram illustrating an exemplary priority queue with pointers to demand instances sorted by demand arrival start time according to a second implementation.

In the shown priority queue the demands are sorted according to their arrival start time: The pointer to demand instance mapping is as follows:
1 -> 201, 2->202, 3->203, 4->204,5->205, 6->206.

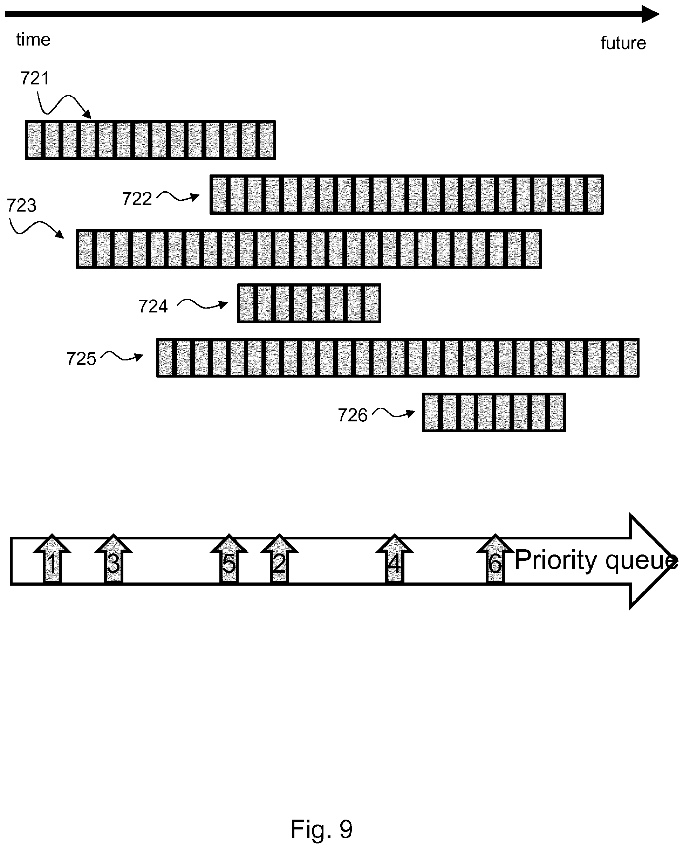

Fig. 9 shows a schematic diagram illustrating an exemplary priority queue with pointers to demand instances sorted by demand arrival completion time according to an embodiment.

In the shown priority queue the demands are sorted according to their demand arrival completion time. The pointer to demand instance mapping is as follows:
1 -> 201, 2->202, 3->203, 4->204, 5->205, 6->206

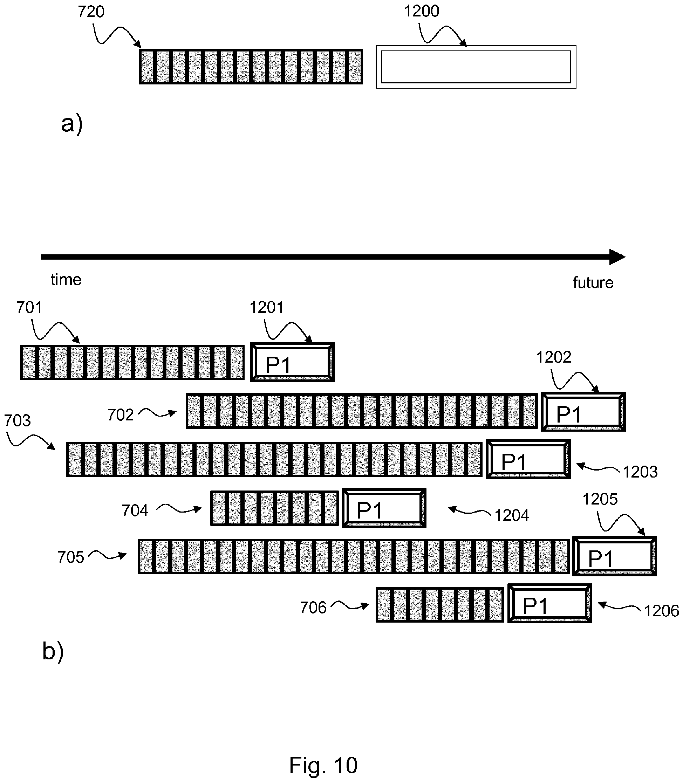

Fig. 10a shows a schematic diagram illustrating an abstract demand context 1200 according to an embodiment.

A demand context 1200 is an information associated with the demand 720. The context may be derived directly from the demand (e.g. if the demand is created by a packet arrival and the context can be derived directly from the packet, e.g. a priority code field in the packet header). The context may also be derived indirectly, e.g. via the detection that the packet belongs to a session or to a flow, such that the demand inherits the context associated with the session or with the flow to which the packet belongs. Also, a combination of both is possible and often used.

Fig. 10b shows a schematic diagram illustrating an exemplary demand context instance according to an embodiment.

A demand context instance 1201 is an instance of a demand context 1200 that has an association with a demand instance 701. In Fig. 10b the following associations are implicitly shown by arrangement on the same line: Demand instance 1201 with demand context 701, 1202 with 702, 1203 with 703, 1204 with 704, 1205 with 705 and 1206 with 706. In the example of Fig. 10b, all packets have a demand context instance containing as value the information "P1", which is indicative of a high priority demand instance.

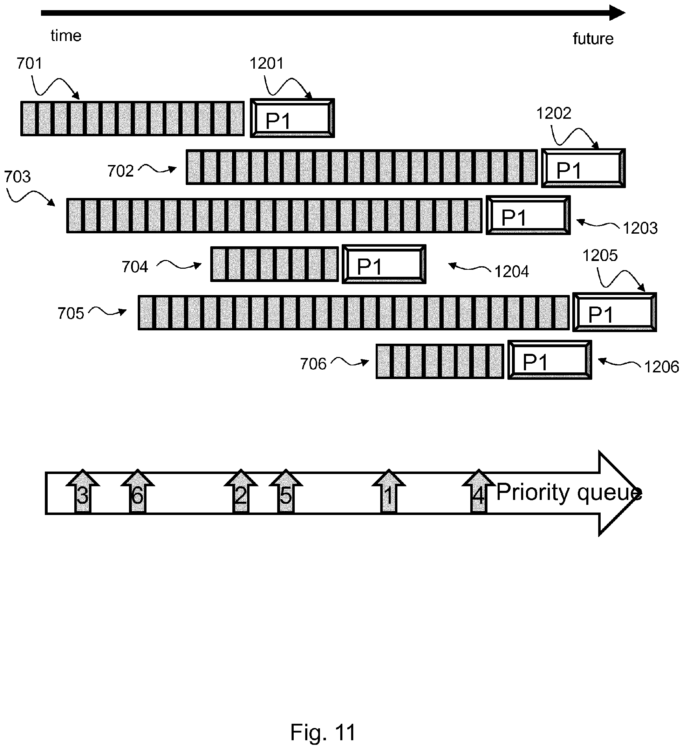

Fig. 11 shows a schematic diagram illustrating a priority queue sorted first by priority contained in context, and second by demand arrival start time according to an embodiment.

Because demand 704 and 701 are high priority (demand context contains demand priority value P1), the pointers to them get sorted to the head of the queue. All pointers to elements with equal priority value get sorted according to the demand arrival start time of their associated demands.

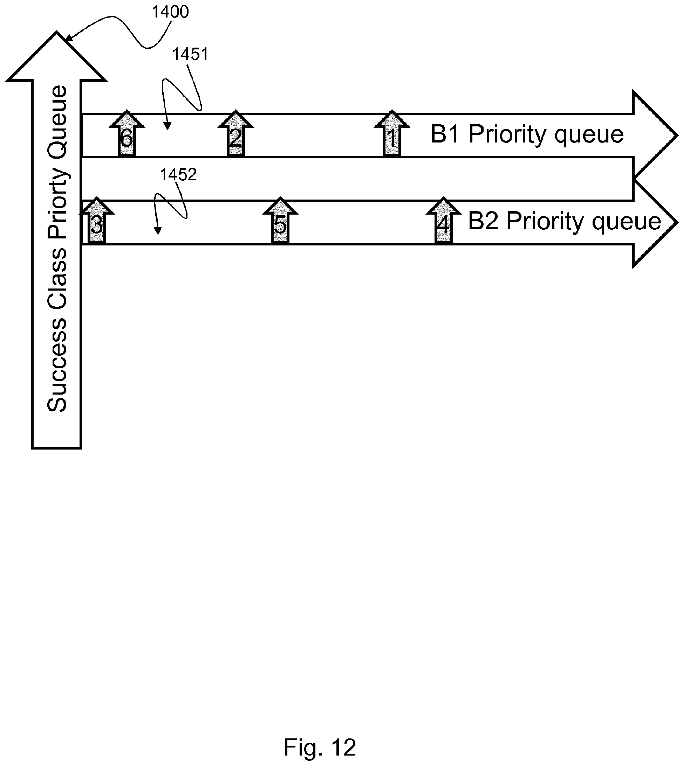

Fig. 12 shows a schematic diagram illustrating an exemplary multi-dimensional priority queue according to an embodiment.

Shown here is a simple example of a 2-dimensional priority queue, comprising a dimension-2 priority queue 1400 (also referred to as Success Class priority queue), which contains as element 2 dimension-1 priority queues, namely the dimension-1 priority queue 1451 associated with bidder 1 and the dimension-1 priority queue 1452 associated with bidder 2. As a preferred embodiment the elements of the priority-2 priority queue may not be the priority-1 queues, but rather pointers to the priority-1 queues. In a preferred embodiment of strict success class rank dependant priority scheduling, when free chargeable resource consumption units become available, the scheduler output side upon demand satisfaction will perform a dequeue operation to the priority-2 queue, obtaining as result the dimension-1 priority queue 1451, and will recursively further dequeue from that queue until it obtains a priority-0 Queue being a single element of a queue being a demand. The Scheduler continues to dequeue (recursively) as long as free chargeable resource consumption units are available, before dequeuing a first element from the priority-1 priority queue 1452.

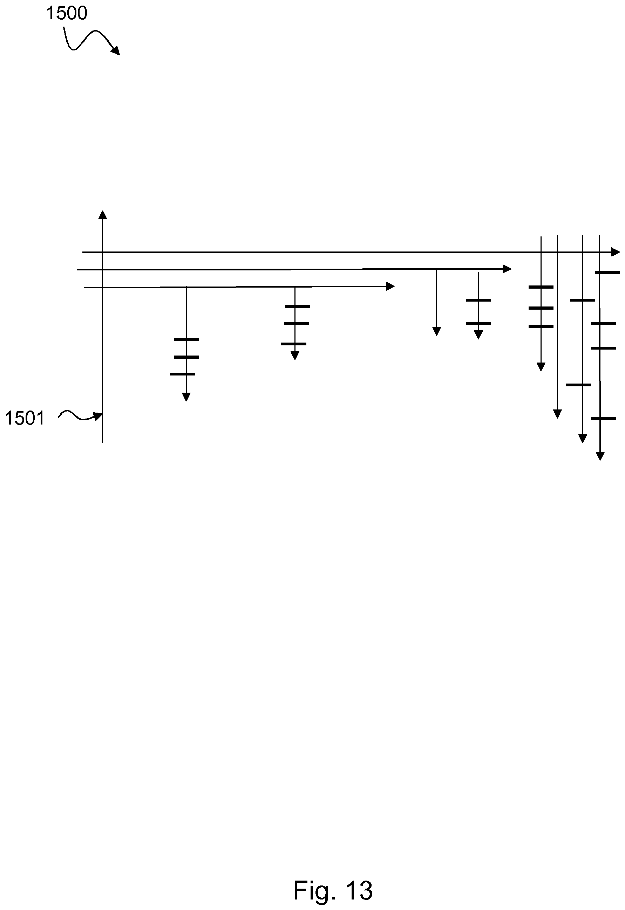

Fig. 13 shows a schematic diagram illustrating an exemplary multi-dimensional priority scheduling queue according to an embodiment.

A multidimensional priority scheduling queue of dimension n may be defined in a recursive way (starting with dimension 0) as follows: A multidimensional priority scheduling queue of dimension 0 is an element of a queue that a scheduler recognizes as demand that shall be scheduled immediately when resources become available to satisfy the demand. When a scheduler uses a multidimensional scheduling priority queue, upon detection of free resources that can be used to satisfy a minimum of one demand, he starts with step 1 and dequeues an element from the multidimensional priority scheduling queue. If the dequeued element is not a multidimensional scheduling priority queue of dimension zero, then the scheduler considers the dequeued element as a multidimensional priority scheduling queue of dimension n-1 and continues in a loop with step 1, until the dequeued element is of dimension 0. The example shows a multidimensional scheduling priority queue 1501, which is of dimension 3. Arrows are queues, lines are queue elements of dimenson 0.

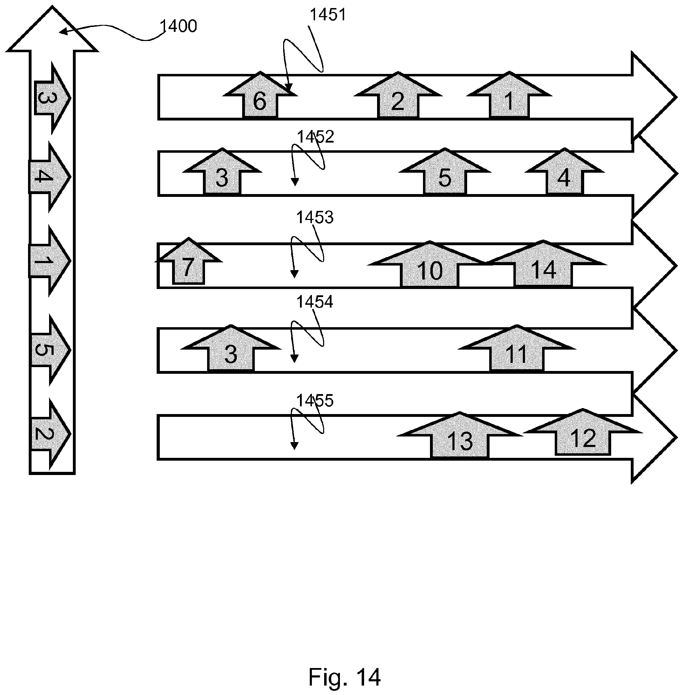

Fig. 14 shows a schematic diagram illustrating a multi-dimensional scheduling priority queue according to an embodiment.

Shown here is a preferred embodiment for a 2 dimensional scheduling priority queue using pointers in the multidimensional scheduling priority queue of dimension 2 to point to the associated multidimensional scheduling priority queue of dimension 1, where each of the multidimensional scheduling priority queues of dimension 1 contain pointers to demands associated with one bidder. The diagram shows a situation where bidder 3 is ranked highest because he has provided the highest bid and therefore has associated the highest success class, in case other bidders had bid the same amount, bidder 3 is still ranked first in the multidimensional scheduling priority queue of dimension 2 because his bid was received by the bidding platform prior to other bids bidding the same amount.

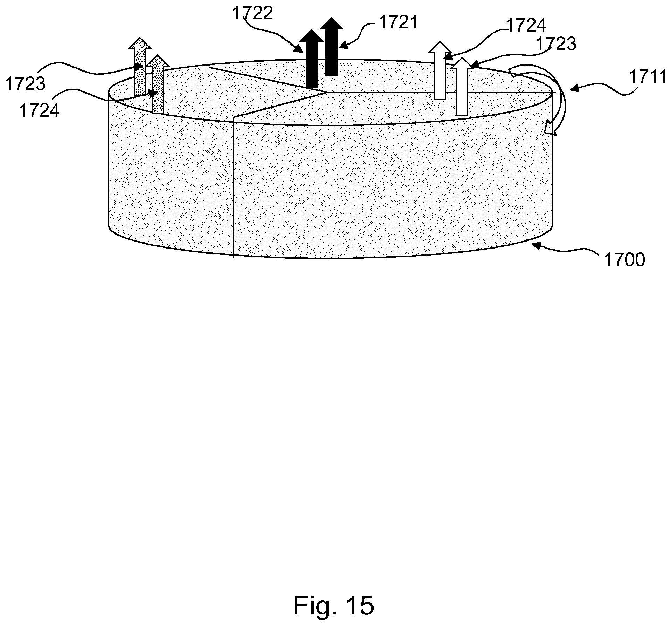

Fig. 15 shows a schematic diagram illustrating a charging period change event according to an embodiment.

The shown ring-structured pointer array 1700 comprises pointer pairs 1721+1722 (active),1723+1724 (next), and 1725+1726 (previous&overnext). At a charging period change event 1711, the ring 1700 gets turned clockwise by 120 degree. Pointers 1721,1723 and 1725 point to a data structure referred to as dimension-2 priority queue, which contains a sorted list of 1 priority queue per bidder, which are sorted according to rank of the success class that the bidders bid achieved in the respective charging period. Pointers 1722, 1724, 1726 each point to one data structure containing one token bucket per bidder. Depending on implementation of the ring structured data structure 1700, it is possible to implement it in such a way in software, that a single change of a pointer simultaneously changes the values of all 6 pointers 1721,1722,1723,1724,1725,1726. Similarly it is possible to achieve the same effect when using FPGA (Field programmable gate array) hardware, also known as programmable hardware, to implement the above in a way that the simultaneous change of the pointers is performed in one clock cycle at the charging period change time.

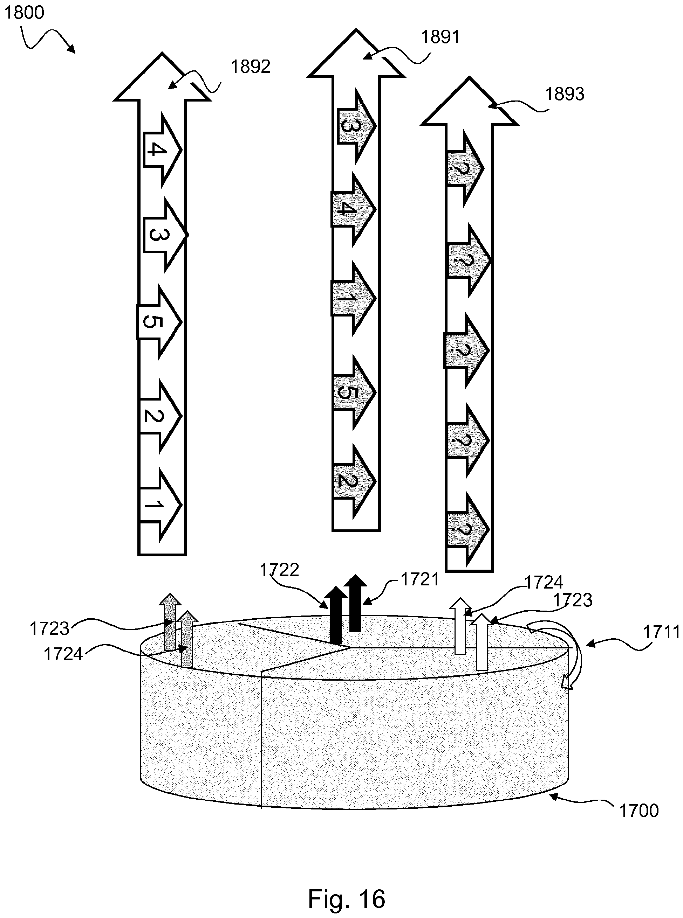

Fig. 16 shows a schematic diagram illustrating a charging period change event mechanism related to the enforcement of preferential treatment according to the success classes of the bidder during the curring tan next charging periods according to an embodiment.

Pointer 1721 points to the success class priority queue 1891 which active during the current charging period n, pointer 1723 to the success class priority queue 1892 which will be active in the next chargin period n+1, and pointer 1723 points to the success class priority queue 1893 which has been active in the previous charging period n-1

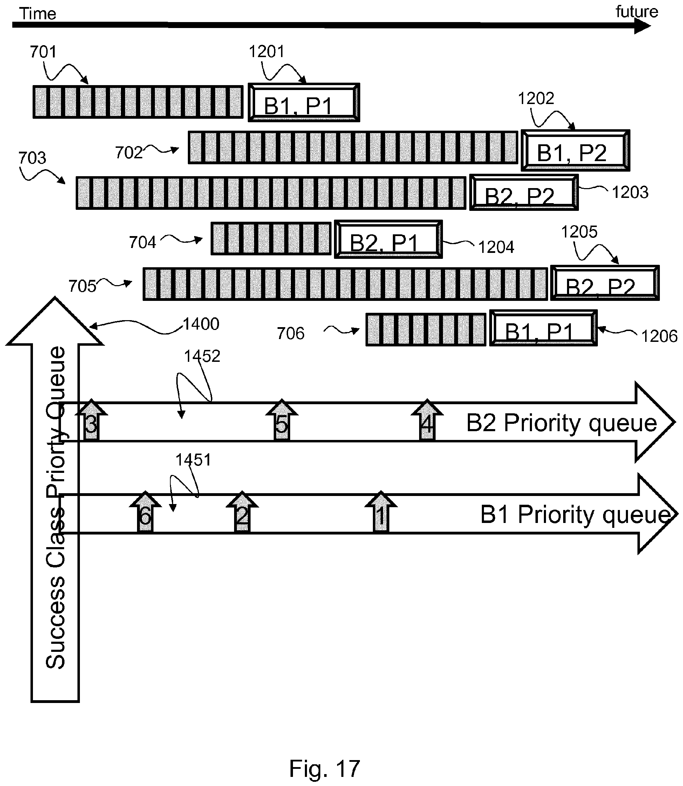

Fig. 17 shows a schematic diagram illustrating a multidimensional priority queue of 2 dimensions according to an embodiment.

In the shown multidimensional priority queue of 2 dimensions the priority queue in dimension 2 is sorted by success class of bidder. The priority queue of dimension 2 contains pointers to the priority queues of dimension 1 which are priority queues. During a charging period with preferential treatment for bidder 2 (single per charging period, i.e. not differentiated bids per traffic class considering priority or traffic). The context also contains the bidder to which the demand is associated (B1 = Bidder 1, B2 = Bidder2). The diagram shows preferential treatment for bidder 2. Bidder 2 demands will be served first, even if they are lower priority than competing bidder 1 demands.

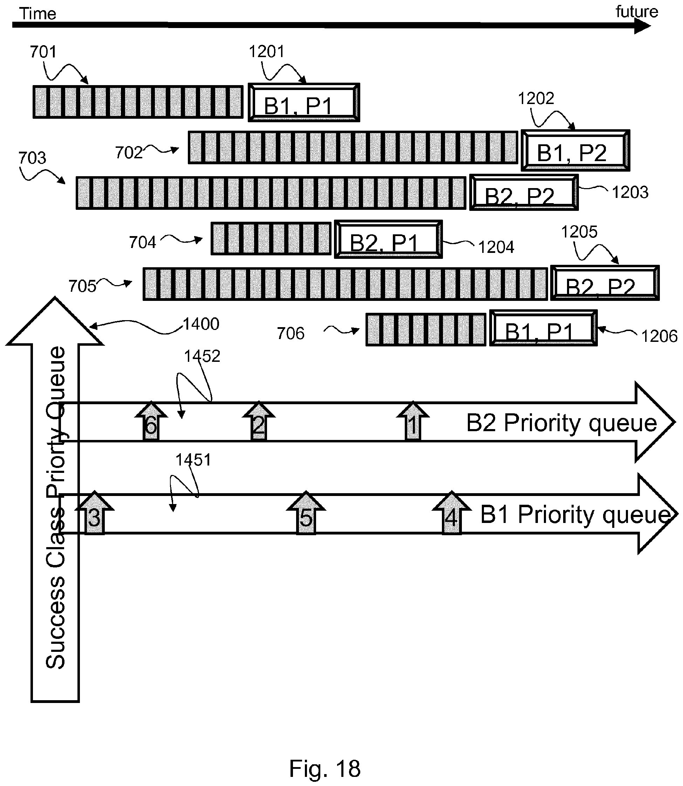

Fig. 18 shows a schematic diagram illustrating a multidimensional priority queue of 2 dimensions according to a further embodiment.

The situation is as in Fig. 17, but in the subsequent charging period bidder 1 gets preferential treatment over bidder 2.

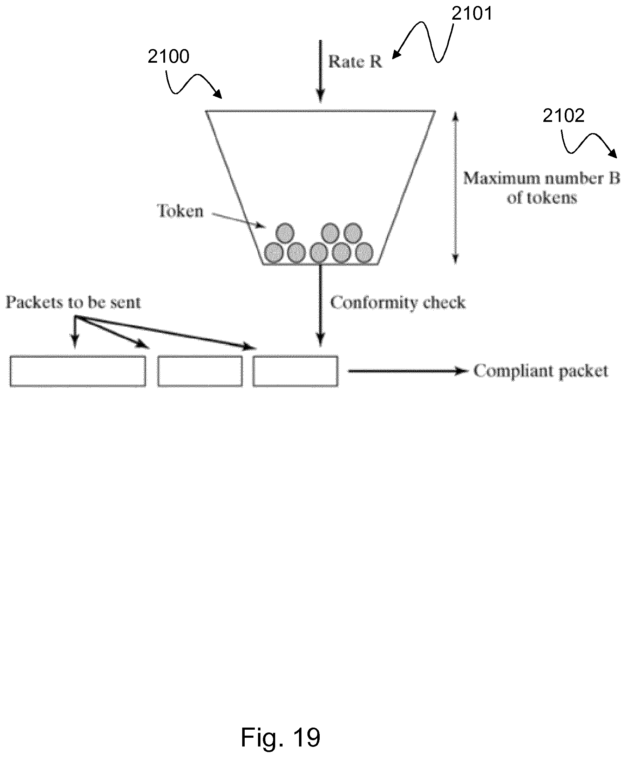

The diagram shows re-sorting of the pointers in the success class priority queue, leading to Bidder B1 now getting preferential treatment over bidder 1. This means that at a charging period switchover event, the entries in the success class priority queue have to be re-sorted according to the success classes of the bidders in the next charging period. Fig. 19 shows a schematic diagram illustrating a token bucket according to an embodiment.

The Token Bucket algorithm is based on a token bucket 2100 which is well known and widely deployed in telecoms equipment, and heavily used by schedulers already. The disclosure presents a modification of the token bucket algorithm. A token bucket is completely defined by the the integer values R 2101 and B 2102, where R defines the Refill Rate and B defines the maximum number of tokens that the bucket can hold - basically the bucket size. The shown packets to be sent are demands, and for each byte (resource consumption demand unit) of a compliant packet that gets consumed (forwarded) one token gets devaluated (taken out of the bucket). The conformity check operation at packet arrival time determines the current amount of tokens in the bucket by multiplying elapsed time with Rate R since the previous packet arrival time, and compares with number of bytes of packet.

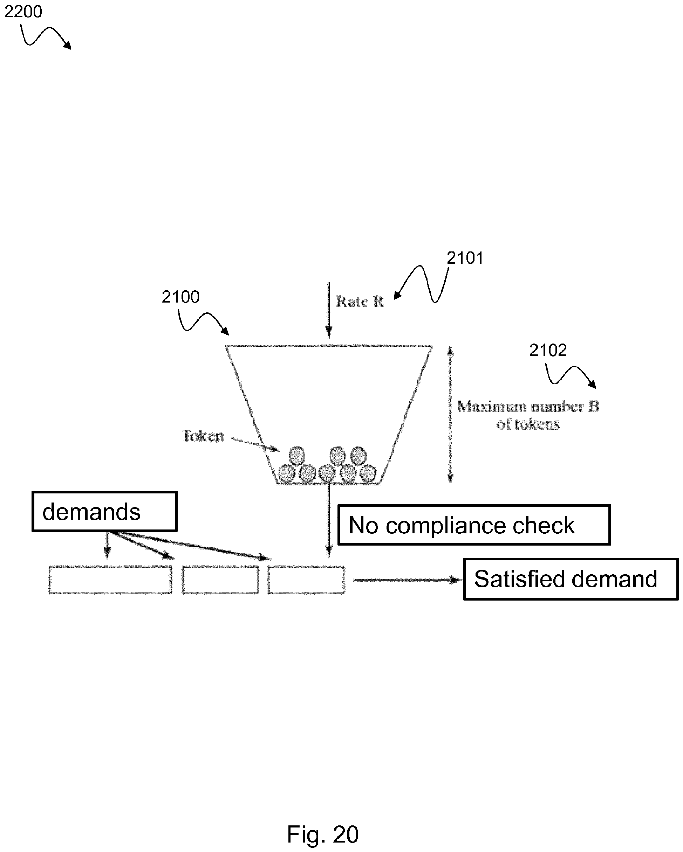

Fig. 20 shows a schematic diagram illustrating a token bucket operation according to an embodiment. The token bucket operation is for wholesale charging. The key part of the disclosure that allows to deploy it in a scalable way into the existing telecoms infrastructure is a preferred embodiment without compliance check.

For wholesale charging for demand satisfaction of demands such as "packets to be sent" we assume large buckets with a size B that is higher than theoretically can be consumed within one charging period. Further we set the Rate R to the value of 0. This allows to even simplify the token bucket operation applied at each packet arrival, as it is not necessary to perform a Conformity Check at each time of packet arrival. As is done today in all token bucket algorithms, the algorithm reduces the amount of tokens in the bucket by the amount of resource consumption demand units contained in the demand that gets satisfied. For wholesale charging purposes of the charged parties being the bidders, it is only necessary to refill the buckets to the maximum size at each charging period change event and record how many tokens had to be refilled. Essentially the bidding process can be seen as a process to determine the price of a token during a charging period.

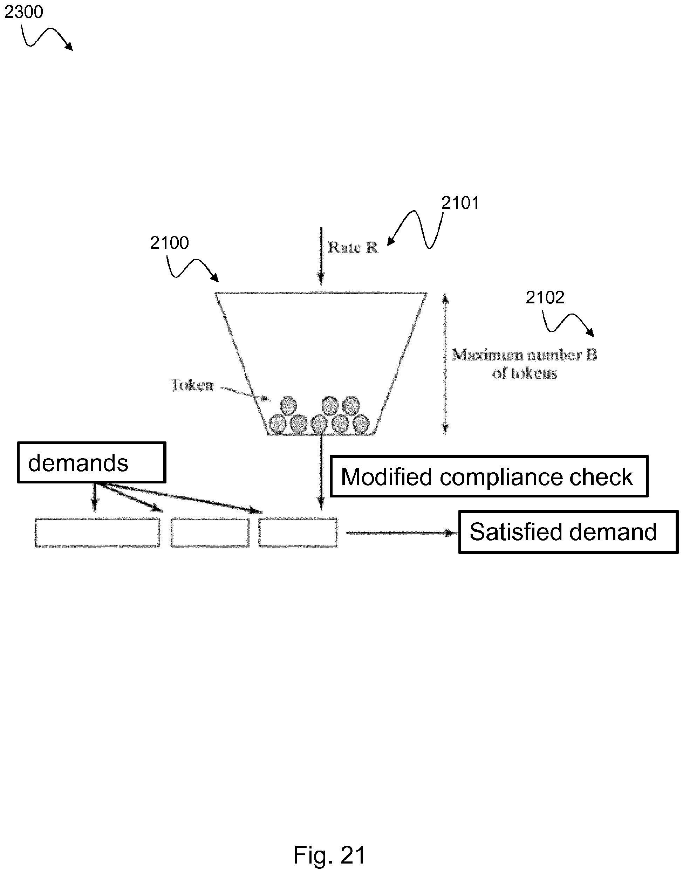

Fig. 21 shows a schematic diagram illustrating a token bucket operation using a modified compliance check according to an embodiment.

The preferred embodiment shown in Fig. 21 uses a Rate R = 0 and uses the standard bucket size and assumes that the bucket is fully filled at the beginning with B tokens and uses a modified compliance check, that checks if the current amount of tokens is still higher than the maximum amount a single demand can consume. In case of non-compliance, the bucket gets nearly refilled by a fixed amount of tokens that is selected in such a way that the remaining tokens plus the added fixed amount of tokens cannot exceed the maximum size B, and the modified compliance check also increments a counter that counts how many times the token bucket has been "nearly refilled" during a charging period. After the next charging period change event, the amount of consumed tokens during the charging period gets determined by multiplying the amount of "token refills" by the fixed refill number and added to the remainder in the bucket.

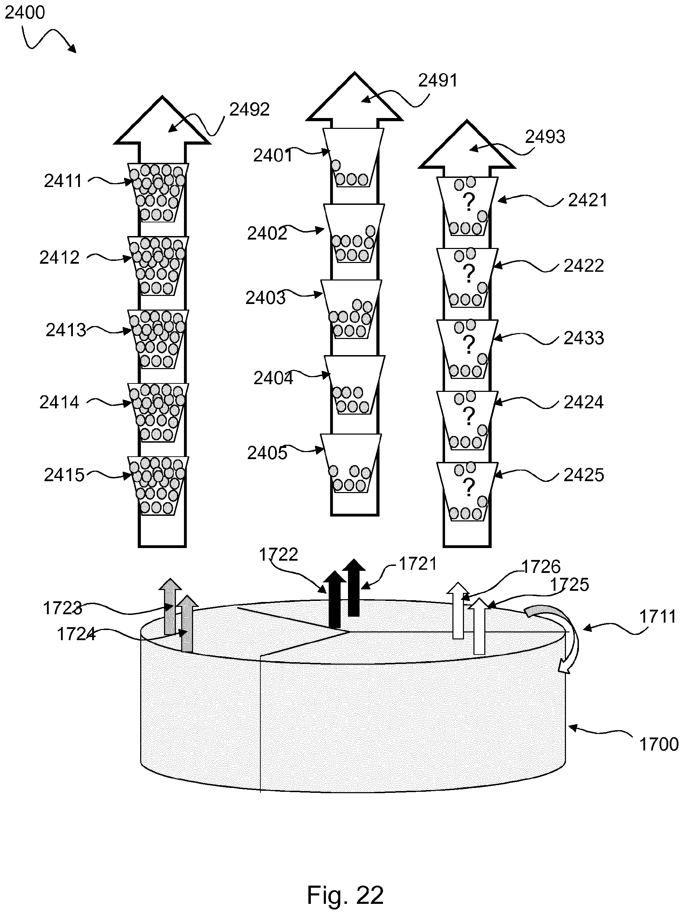

Fig. 22 shows a schematic diagram illustrating a charging period change event mechanism according to an embodiment.

A preferrred embodiment for charging period change event mechanism related to the wholesale charging of bidders according to bids offered is described below:
Pointer 1722 points to the data structure 2491 containing one active token bucket 2401-2406 for the current charging period for each of the 6 bidders in the example. Pointer 1724 points to the token buckets for the next charging period n+1. Pointer 1726 points to the token buckets of the previous charging period n-1 which get refilled and become the "overnext" token buckets.

A preferred embodiment for wholesale charging: selection of a high value for B, i.e. a large token bucket size e.g. highest long integer or even higher is described below:
The pointer 1724 points to bidder specific token buckets 2411-2415, which at the beginning of a charging period are filled with a value of B, that is selected as such a high value, that it is impossible to empty a bucket during a charging period.

A preferred embodiment for wholesale charging: determining per bidder and per charging period the amount of tokens consumed for the demand satisfaction of chargeable resource demand units is described below:
The pointer 1726 points to bidder specific token buckets 2421-2425, which at the beginning of a charging period n+1 contain the remaining token buckets of charging period n. In order to refill to maximum size B, a value of C tokens has to be added. This is the amount of tokens consumed by the bidder during the charging period n.

A preferred embodiment for wholesale charging and monetization: determining per bidder and per charging period the monetary amount to be paid by bidder to operator depending upon bid offered is described below:
The amount Cn of tokens consumed by the bidder during the charging period n has to multiplied with the monetary amount, that the bidder had offered in the bidding process for demand satisfaction of each resource consumption demand unit that gets satisfied during Charging period n. This may occur offline in a BSS or it may occur online in case of realtime charging.

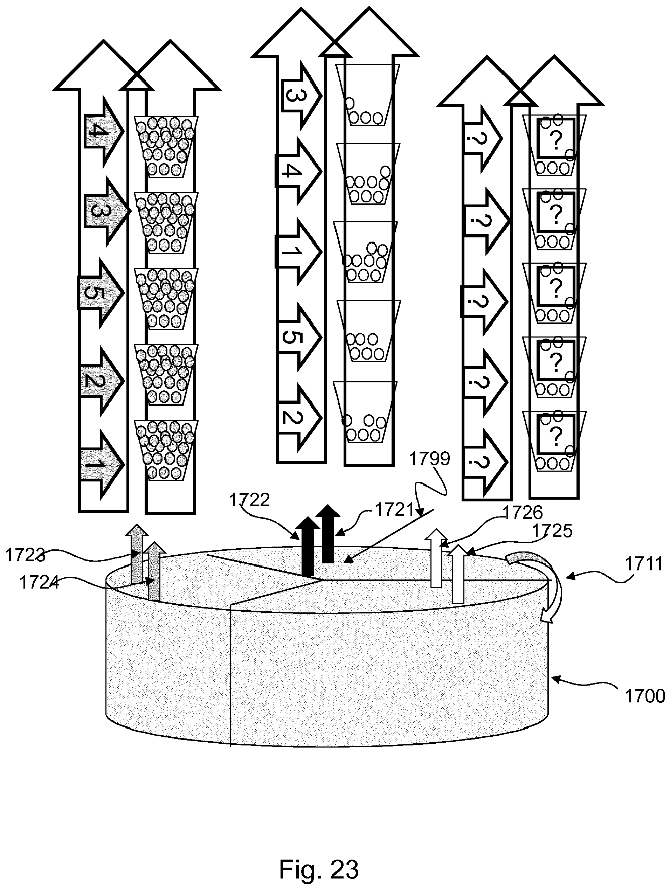

Fig. 23 shows a schematic diagram illustrating a charging period change event mechanism according to an embodiment.

A key feature is that instantaneous and simultaneous switching of preferential treatment policy and of the associated token price is enabled, effected via the change of the value of a single pointer 1799, pointing to the both active pointers in the ring structure pointer array. In case of implementation with FPGA (Field programmable gate array) the change can even be effected in a single clock cycle.

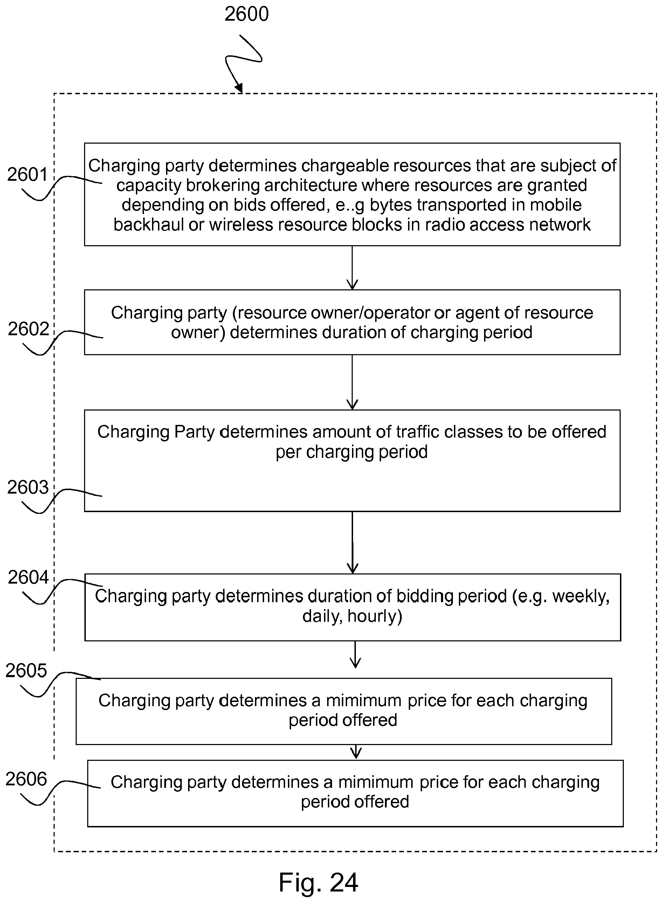

Fig. 24 shows a schematic diagram illustrating a bidding process 2600 with preparation steps by charing party according to an embodiment.

The bidding process 2600 includes a first step 2601: Charging party determines chargeable resources that are subject of capacity brokering architecture where resources are granted depending on bids offered, e..g bytes transported in mobile backhaul or wireless resource blocks in radio access network.

The bidding process 2600 includes a second step 2602: Charging party (resource owner/operator or agent of resource owner) determines duration of charging period.

The bidding process 2600 includes a third step 2603: Charging Party determines amount of traffic classes to be offered per charging period.

The bidding process 2600 includes a fourth step 2604: Charging party determines duration of bidding period (e.g. weekly, daily, hourly).

The bidding process 2600 includes a fifth step 2605: Charging party determines a mimimum price for each charging period offered.

The bidding process 2600 includes a sixth step 2606: Charging party determines a mimimum price for each charging period offered.

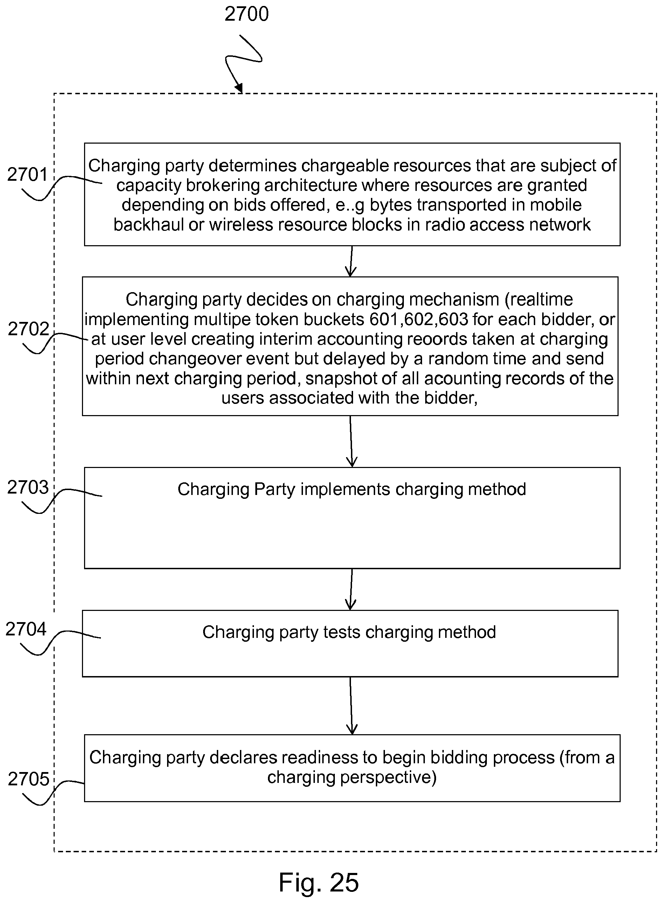

Fig. 25 shows a schematic diagram illustrating a bidding process 2700 with preparation steps by charing party network side according to an embodiment.

The bidding process 2700 includes a first step 2701: Charging party determines chargeable resources that are subject of capacity brokering architecture where resources are granted depending on bids offered, e.g. bytes transported in mobile backhaul or wireless resource blocks in radio access network.

The bidding process 2700 includes a second step 2702: Charging party decides on charging mechanism (realtime implementing multipe token buckets 601,602,603 for each bidder, or at user level creating interim accounting records taken at charging period changeover event but delayed by a random time and send within next charging period, snapshot of all acounting records of the users associated with the bidder.

The bidding process 2700 includes a third step 2703: Charging Party implements charging method
The bidding process 2700 includes a fourth step 2704: Charging party tests charging method
The bidding process 2700 includes a fifth step 2705: Charging party declares readiness to begin bidding process (from a charging perspective)

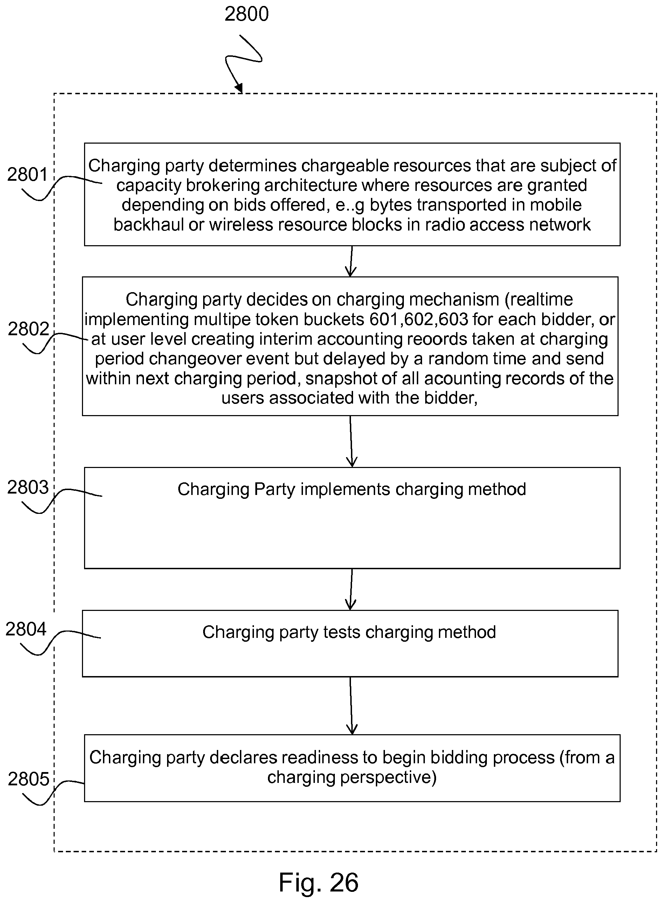

Fig. 26 shows a schematic diagram illustrating a bidding process 2800 with preparation steps by charing party network side according to an embodiment.

The bidding process 2800 includes a first step 2801: Charging party determines chargeable resources that are subject of capacity brokering architecture where resources are granted depending on bids offered, e..g bytes transported in mobile backhaul or wireless resource blocks in radio access network
The bidding process 2800 includes a second step 2802: Charging party decides on charging mechanism (realtime implementing multipe token buckets 601,602,603 for each bidder, or at user level creating interim accounting records taken at charging period changeover event but delayed by a random time and send within next charging period, snapshot of all acounting records of the users associated with the bidder,
The bidding process 2800 includes a third step 2803: Charging Party implements charging method
The bidding process 2800 includes a fourth step 2804: Charging party tests charging method
The bidding process 2800 includes a fifth step 2805: Charging party declares readiness to begin bidding process (from a charging perspective)

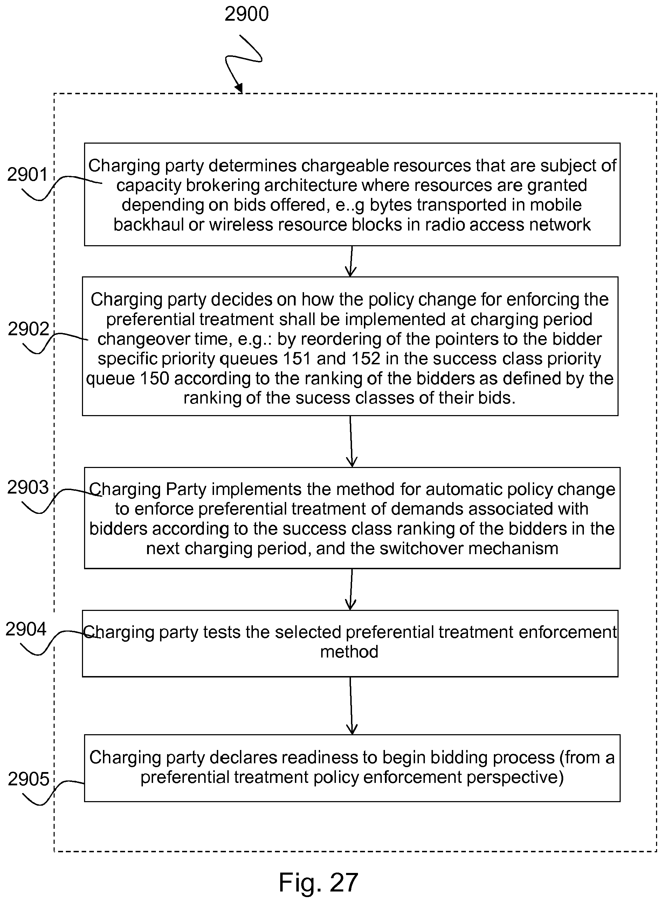

Fig. 27 shows a schematic diagram illustrating a bidding process 2900 with preparation steps by charing party network side according to an embodiment.

The bidding process 2900 includes a first step 2901: Charging party determines chargeable resources that are subject of capacity brokering architecture where resources are granted depending on bids offered, e.g. bytes transported in mobile backhaul or wireless resource blocks in radio access network
The bidding process 2900 includes a second step 2902: Charging party decides on how the policy change for enforcing the preferential treatment shall be implemented at charging period changeover time, e.g.: by reordering of the pointers to the bidder specific priority queues 151 and 152 in the success class priority queue 150 according to the ranking of the bidders as defined by the ranking of the sucess classes of their bids.

The bidding process 2900 includes a third step 2903: Charging Party implements the method for automatic policy change to enforce preferential treatment of demands associated with bidders according to the success class ranking of the bidders in the next charging period, and the switchover mechanism
The bidding process 2900 includes a fourth step 2904: Charging party tests the selected preferential treatment enforcement method
The bidding process 2900 includes a fifth step 2905: Charging party declares readiness to begin bidding process (from a preferential treatment policy enforcement perspective)

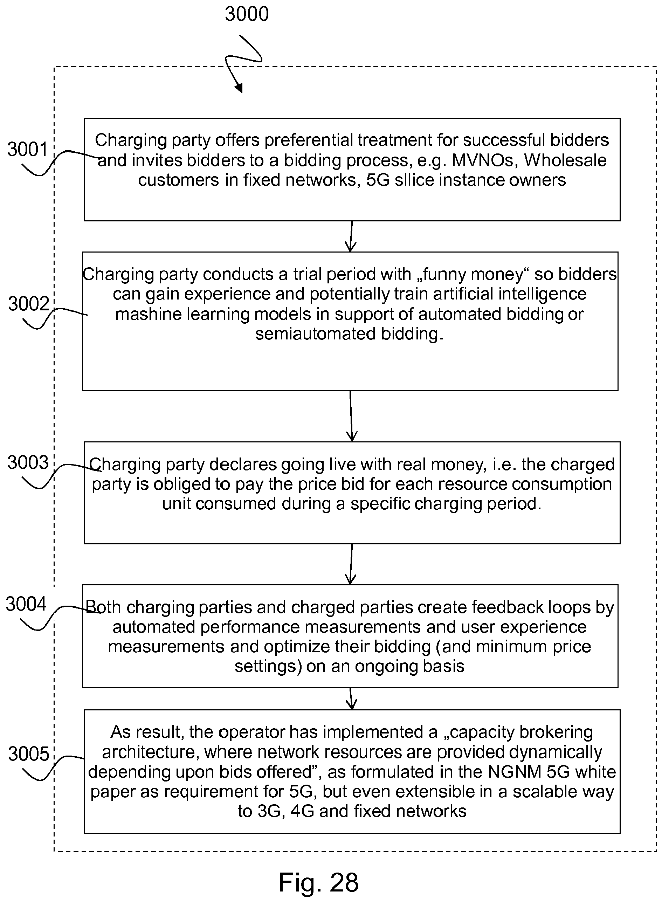

Fig. 28 shows a schematic diagram illustrating a bidding process 3000 with preparation steps by charing party network side according to an embodiment.

The bidding process 3000 includes a first step 3001: Charging party offers preferential treatment for successful bidders and invites bidders to a bidding process, e.g. MVNOs, Wholesale customers in fixed networks, 5G sllice instance owners

The bidding process 3000 includes a second step 3002: Charging party conducts a trial period with "funny money" so bidders can gain experience and potentially train artificial intelligence mashine learning models in support of automated bidding or semiautomated bidding.

The bidding process 3000 includes a third step 3003: Charging party declares going live with real money, i.e. the charged party is obliged to pay the price bid for each resource consumption unit consumed during a specific charging period.

The bidding process 3000 includes a fourth step 3004: Both charging parties and charged parties create feedback loops by automated performance measurements and user experience measurements and optimize their bidding (and minimum price settings) on an ongoing basis
The bidding process 3000 includes a fifth step 3005: As result, the operator has implemented a "capacity brokering architecture, where network resources are provided dynamically depending upon bids offered", as formulated in the NGNM 5G white paper as requirement for 5G, but even extensible in a scalable way to 3G, 4G and fixed networks
The methods, systems and devices described herein may be implemented as electrical and/or optical circuit within a chip or an integrated circuit or an application specific integrated circuit (ASIC). The invention can be implemented in digital and/or analogue electronic and optical circuitry.

The methods, systems and devices described herein may be implemented as software in a Digital Signal Processor (DSP), in a micro-controller or in any other side-processor or as hardware circuit within an application specific integrated circuit (ASIC) of a Digital Signal Processor (DSP).

The invention can be implemented in digital electronic circuitry, or in computer hardware, firmware, software, or in combinations thereof, e.g. in available hardware of conventional optical transceiver devices or in new hardware dedicated for processing the methods described herein.

The present disclosure also supports a computer program product including computer executable code or computer executable instructions that, when executed, causes at least one computer to execute the performing and computing steps described herein, in particular the method 300 as described above with respect to Fig. 3 and the techniques described above with respect to Figs. 1 to 5. Such a computer program product may include a readable non-transitory storage medium storing program code thereon for use by a computer. The program code may perform the method 300 as described above with respect to Figure 3.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A network resources brokering system (100), comprising:
a communication network (110) with at least one enforcement function for preferential treatment and charging; and
a brokering entity (120), configured to receive requests (131, 132, 133) from a plurality of network entities (121, 122, 123) for providing preferential treatment (124) during usage of chargeable resources (111, 112, 113) within a predefined charging period (125), each request comprising an electronic bid value (141, 142, 143) competing with other network entities (121, 122, 123) for preferential treatment during the usage of chargeable resources in the charging period (125),
wherein the brokering entity (120) is configured to rank each network entity (121) from the plurality of network entities (121, 122, 123) into one of a multiplicity of success classes based upon their electronic bid values offered and to interwork with the at least one enforcement function for preferential treatment and charging.

2. The network resources brokering system (100) of claim 1,
wherein the brokering entity (120) is configured to rank the network entities (121) according to their success class prior to a start of the charging period (125).

3. The network resources brokering system (100) of claim 1 or 2,
wherein the at least one chargeable resource (111, 112, 113) is a wireless resource block, which constitutes a radio access network (RAN) resource and the brokering entity (120) is configured to grant preferenential treatment regarding the consumption of wireless resource blocks.

4. The network resources brokering system (100) of one of the preceding claims,
wherein the brokering entity (120) is configured to rank the plurality of network entities (121, 122, 123) according to their electronic bid values (141, 142, 143) and to enforce the preferential treatment of any higher ranked network entity over any lower ranked network entity.

5. The network resources brokering system (100) of claim 4,
wherein the brokering entity (120) is configured to assign a maximum of one network entity to a success class, allowing a clear ranking of network entities.

6. The network resources brokering system (100) of claim 5,
wherein the brokering entity (120) is configure to to assign multiple network entities to the same success class and to apply fair arbitration schemes such as a round robin distribution among the priority queues of equally ranked bidders.

7. The network resources brokering system (100) of one of the preceding claims,
wherein the chargeable resource is a QoS differentiated compute unit provided by a virtual machine or by a container where the QoS differentiation is differentiated by a low latency class.

8. The network resources brokering system (100) of one of the preceding claims,
wherein the charging period (125) is predetermined having a predetermined start time and a predetermined duration.

9. The network resources brokering system (100) of one of the preceding claims,
wherein the communication network (110) is a network according to a 3GPP defined fifth generation (5G), and wherein a 5G slice instance owner benefits from the preferential treatment.

10. The network resources brokering system (100) of one of the preceding claims,
wherein the brokering entity (120) is configured to interwork directly or indirectly via a enforcement function management system with at least one enforcement function for preferential treatment and charging in order to provide preferential treatment to demands associated with the selected network entity during a charging period.

11. The network resources brokering system (100) of one of the preceding claims,
wherein the brokering entity (120) is configured to instruct a minimum of one online charging function to charge the amount bid for the consumption of each chargeable consumption unit consumed during a charging period.

12. The network resources brokering system (100) of claim 11,
wherein the the brokering entity (120) is configured to instruct a minimum of one online charging function as defined by 3GPP to charge the amount bid for the consumption of each chargeable consumption unit consumed during a charging period.

13. The network resources brokering system (100) of one of the preceding claims,
wherein the brokering entity (120) is configured to instruct a minimum of one offline charging function as defined by 3GPP to charge the amount bid for the consumption of each chargeable consumption unit consumed during a charging period.

14. The network resources brokering system (100) of claim 13,
wherein the brokering entity (120) is configured to instruct a 3GPP defined PCRF to create a policy and charging rule set which automatically and simultaneously changes the charging rules and the policy at charging period change events whereby simultaneously enforcing the change of preferential treatment policies and the change of charging policies to reflect the bids offered for the charging periods prior to and after the charging period change.

15. A brokering entity (120, 200) for providing access to at least one network resource (111, 112, 113) of a communication network (110), the brokering entity (120, 200) comprising:
a receiver (223), configured to receive requests (131, 132, 133) from a plurality of network entities (121, 122, 123) for accessing (124) the at least one network resource (111, 112, 113) within a charging period (125), each request (131, 132, 133) comprising an electronic bid value (141, 142, 143) competing with other network entities (121, 122, 123) for accessing the at least one network resource (111, 112, 113) with preferential treatment; and
a controller (221), configured to determine for each charging period a bid ranking according to the electronic bid values offered by assigning the electronic bid values to a success class, wherein the success classes are ranked according to the amount of the electronic bid value in such a way, that a bidder providing a higher bid gets ranked higher and gets preferential treatment over a bidder that has provided a lower bid value.

16. The brokering entity (120, 200) of claim 15,
wherein the communication network (110) is a network according to a fifth generation (5G) or according to a further generation, and wherein the controller (221) is configured to grant the selected network entity (121) access (124) with preferential treatment to at least one network resource of a network slice of the communication network.

## Amended claims

### Amended claims in accordance with Rule 137(2) EPC.

1. A network resources brokering system (100), comprising:
a communication network (110) with at least one enforcement function for preferential treatment and charging; and
a brokering entity (120), configured to receive requests (131, 132, 133) from a plurality of network entities (121, 122, 123) for providing preferential treatment (124) during usage of chargeable resources (111, 112, 113) within a predefined charging period (125), each request comprising an electronic bid value (141, 142, 143) competing with other network entities (121, 122, 123) for preferential treatment during the usage of chargeable resources in the charging period (125),
wherein the brokering entity (120) is configured to rank each network entity (121) from the plurality of network entities (121, 122, 123) into one of a multiplicity of success classes based upon their electronic bid values offered and to interwork with the at least one enforcement function for preferential treatment and charging,
wherein the communication network (110) is a network according to a 3GPP defined fifth generation (5G), and wherein a 5G slice instance owner benefits from the preferential treatment.

2. The network resources brokering system (100) of claim 1,
wherein the brokering entity (120) is configured to rank the network entities (121) according to their success class prior to a start of the charging period (125).

3. The network resources brokering system (100) of claim 1 or 2,
wherein the at least one chargeable resource (111, 112, 113) is a wireless resource block, which constitutes a radio access network (RAN) resource and the brokering entity (120) is configured to grant preferenential treatment regarding the consumption of wireless resource blocks.

4. The network resources brokering system (100) of one of the preceding claims,
wherein the brokering entity (120) is configured to rank the plurality of network entities (121, 122, 123) according to their electronic bid values (141, 142, 143) and to enforce the preferential treatment of any higher ranked network entity over any lower ranked network entity.

5. The network resources brokering system (100) of claim 4,
wherein the brokering entity (120) is configured to assign a maximum of one network entity to a success class, allowing a clear ranking of network entities.

6. The network resources brokering system (100) of claim 5,
wherein the brokering entity (120) is configure to assign multiple network entities to the same success class and to apply fair arbitration schemes such as a round robin distribution among the priority queues of equally ranked bidders.

7. The network resources brokering system (100) of one of the preceding claims,
wherein the chargeable resource is a QoS differentiated compute unit provided by a virtual machine or by a container where the QoS differentiation is differentiated by a low latency class.

8. The network resources brokering system (100) of one of the preceding claims,
wherein the charging period (125) is predetermined having a predetermined start time and a predetermined duration.

9. The network resources brokering system (100) of one of the preceding claims,
wherein the brokering entity (120) is configured to interwork directly or indirectly via a enforcement function management system with at least one enforcement function for preferential treatment and charging in order to provide preferential treatment to demands associated with the selected network entity during a charging period.

10. The network resources brokering system (100) of one of the preceding claims,
wherein the brokering entity (120) is configured to instruct a minimum of one online charging function to charge the amount bid for the consumption of each chargeable consumption unit consumed during a charging period.

11. The network resources brokering system (100) of claim 10,
wherein the brokering entity (120) is configured to instruct a minimum of one online charging function as defined by 3GPP to charge the amount bid for the consumption of each chargeable consumption unit consumed during a charging period.

12. The network resources brokering system (100) of one of the preceding claims,
Wherein the brokering entity (120) is configured to instruct a minimum of one offline charging function as defined by 3GPP to charge the amount bid for the consumption of each chargeable consumption unit consumed during a charging period.

13. The network resources brokering system (100) of claim 12,
wherein the brokering entity (120) is configured to instruct a 3GPP defined PCRF to create a policy and charging rule set which automatically and simultaneously changes the charging rules and the policy at charging period change events whereby simultaneously enforcing the change of preferential treatment policies and the change of charging policies to reflect the bids offered for the charging periods prior to and after the charging period change.

14. A brokering entity (120, 200) for providing access to at least one network resource (111, 112, 113) of a communication network (110), the brokering entity (120, 200) comprising:
a receiver (223), configured to receive requests (131, 132, 133) from a plurality of network entities (121, 122, 123) for accessing (124) the at least one network resource (111, 112, 113) within a charging period (125), each request (131, 132, 133) comprising an electronic bid value (141, 142, 143) competing with other network entities (121, 122, 123) for accessing the at least one network resource (111, 112, 113) with preferential treatment; and
a controller (221), configured to determine for each charging period a bid ranking according to the electronic bid values offered by assigning the electronic bid values to a success class, wherein the success classes are ranked according to the amount of the electronic bid value in such a way, that a bidder providing a higher bid gets ranked higher and gets preferential treatment over a bidder that has provided a lower bid value,
wherein the communication network (110) is a network according to a fifth generation (5G) or according to a further generation, and wherein the controller (221) is configured to grant the selected network entity (121) access (124) with preferential treatment to at least one network resource of a network slice of the communication network.
